# EUROPEAN PATENT APPLICATION

(11) **EP 4 823 032 A1**
(43) Date of publication of application: **14.10.2026**
(21) Application number: 26159425.3
(22) Date of filing: 18.02.2026
(51) Int. Cl.: H04L 9/06

(54) **ENCRYPTED DATA COMPARISON SYSTEM, ENCRYPTED DATA COMPARISON METHOD, COMPUTER-READABLE NON-TRANSITORY STORAGE MEDIUM, AND DATA COMPARATOR**

(30) Priority: 09.04.2025 JP 2025064244
(71) Applicant: Hitachi, Ltd., Tokyo 100-8280 (JP)
(72) Inventor: YOSHINO, Masayuki, Tokyo, 100-8280 (JP); SATO, Hisayoshi, Tokyo, 100-8280 (JP); YAMAMOTO, Kyohei, Tokyo, 100-8280 (JP); SHINOKI, Hirotomo, Tokyo, 100-8280 (JP)
(74) Representative: Mewburn Ellis LLP

(57) **Abstract**

A system: calculates, for each i (1≦i≦n), a first exclusive OR of a compact second hash value based on a n-th to i-th bit string of a registered value, a secret key, and a random number, and the i-th bit; obtains, for each j (1≦j≦n), a third hash value from a secret key and a bit string obtained by inverting the j-th bit of a n-th to j-th bit string of a comparison value; calculates, for each k (1≦k≦n), a second exclusive OR of a compact fourth hash value obtained from a k-th third hash value of an encrypted query including each third hash value and the random number, and a k-th first exclusive OR of encrypted data including each first exclusive OR; and determines whether the registered value is larger or smaller than the comparison value based on the second exclusive OR.

## Description

### CLAIM OF PRIORITY

The present application claims priority from Japanese patent application JP 2025-064244 filed on April 09, 2025, the content of which is hereby incorporated by reference into this application.

### BACKGROUND OF THE INVENTION

The present invention relates to an ENCRYPTED DATA COMPARISON SYSTEM, an ENCRYPTED DATA COMPARISON METHOD, a COMPUTER-READABLE NON-TRANSITORY STORAGE MEDIUM, AND a DATA COMPARATOR.

As a background art of the present technical field, there is JP 2020-204731 A. The publication describes that "a data comparison device holds first encrypted data obtained by encrypting a first plaintext and second encrypted data obtained by encrypting a second plaintext, in which the first encrypted data is generated by performing encryption for each of a plurality of blocks and shuffling of the plurality of blocks for the first plaintext divided into the plurality of blocks, the second encrypted data is generated by performing encryption for each of a plurality of blocks for the second plaintext divided into the plurality of blocks, a value of the plaintext is embedded as a value indicating a magnitude comparison result in at least one of the first encrypted data and the second encrypted data, and the data comparison device determines a magnitude relationship between the first plaintext and the second plaintext by comparing the blocks at the same position before the shuffling of the first encrypted data and the second encrypted data" (see Abstract) .

### SUMMARY OF THE INVENTION

In the technology described in JP 2020-204731 A, the first encrypted data obtained by encrypting the first plaintext is compared with the second encrypted data obtained by encrypting the second plaintext, and a comparison result regarding the magnitudes of the values of the first plaintext and the second plaintext is output without decrypting the first encrypted data and the second encrypted data.

Specifically, in the technology described in JP 2020-204731 A, a specific bit of any one of the first plaintext and the second plaintext is inverted, and then each bit of the first plaintext and the second plaintext is converted into a hash value, and magnitude comparison is performed based on such perfect matching. Furthermore, in the technology described in JP 2020-204731 A, secure hash algorithm (SHA)-256 is exemplified as an example of a hash function from properties such as irreversibility and collision resistance.

However, the hash value of SHA-256 is 256 bits, and when each bit of the plaintext is converted into a 256-bit hash value, the first encrypted data and the second encrypted data are enlarged to at least 256 times the magnitudes of the original plaintexts. As described above, in the technology described in JP 2020-204731 A, there is room for improvement in data size of the encrypted data.

One aspect of the present invention implements processing of comparing encrypted data without decrypting the encrypted data while reducing a size of the encrypted data.

In order to solve the above problems, the one aspect of the present invention adopts the following configuration. An encrypted data comparison system comprises: a register; a viewer; and a data comparator, the register is configured to hold a numerical value to be registered and a secret key, the viewer is configured to hold a numerical value to be compared and the secret key, the numerical value to be registered and the numerical value to be compared are expressed by n bits for which a predetermined padding operation has been performed or has not been performed, a processor of the register is configured to: acquire a pseudo random number; perform encryption processing for each i-th bit of the numerical value to be registered; in the encryption processing for each of the i-th bit, extract a first bit string from an n-th bit to the i-th bit among the n bits indicating the numerical value to be registered; acquire a first hash value for a value based on the extracted first bit string and the secret key by using a first hash function; acquire a second hash value for a value based on the first hash value and the pseudo random number by using a second hash function that outputs a hash value of a predetermined bit or less or a predetermined value or less; calculate a first exclusive OR of the second hash value and the i-th bit of the numerical value to be registered; generate encrypted data to be registered including the pseudo random number and each of the calculated first exclusive OR; and transmit the encrypted data to be registered to the data comparator, the data comparator is configured to store the encrypted data to be registered, a processor of the viewer is configured to: for each j-th bit of the numerical value to be compared, extract a second bit string from an n-th bit to the j-th bit among the n bits indicating the numerical value to be compared; acquire a third bit string obtained by inverting the j-th bit of the second bit string; acquire a third hash value for a value based on the acquired third bit string and the secret key by using the first hash function; generate an encrypted query including each acquired third hash value; and transmit the generated encrypted query to the data comparator, and a processor of the data comparator is configured to: perform comparison processing for each variable k which is equal to or more than 1 and equal to or less than n; in the comparison processing for each of the variable k, acquire a fourth hash value for a value based on the third hash value stored at a k-th position of the encrypted query and the pseudo random number stored in the encrypted data to be registered by using the second hash function; calculate a second exclusive OR of the acquired fourth hash value and the first exclusive OR stored at a k-th position of the encrypted data to be registered; and output a comparison result indicating a magnitude relationship between the numerical value to be registered and the numerical value to be compared based on the second exclusive OR.

The one aspect of the present invention can implement the processing of comparing the encrypted data without decrypting the encrypted data while reducing a size of the encrypted data.

Problems, configurations, and effects which are not mentioned above are explained in the following embodiments.

### BRIEF DESCRIPTIONS OF DRAWINGS

The present invention can be appreciated by the description which follows in conjunction with the following figures, wherein:
Fig. 1 is a block diagram illustrating a configuration example of an encrypted data comparison system according to the first embodiment;
Fig. 2A is a diagram illustrating a data configuration example of clinical data according to the first embodiment;
Fig. 2B is a diagram illustrating a data configuration example of standard encrypted data according to the first embodiment;
Fig. 2C is a diagram illustrating a data configuration example of comparison encrypted data according to the first embodiment;
Fig. 2D a diagram illustrating a data configuration example of a transmission standard encrypted data is according to the first embodiment;
Fig. 2E is a diagram illustrating a data configuration example of decrypted clinical data according to the first embodiment;
Fig. 3A is a block diagram illustrating a hardware configuration example of a computer implementing a register, a viewer, a manager, and a distributor according to the first embodiment;
Fig. 3B is a block diagram illustrating a functional configuration example of the register according to the first embodiment;
Fig. 3C is a block diagram illustrating a functional configuration example of the viewer according to the first embodiment;
Fig. 3D is a block diagram illustrating a functional configuration example of the manager according to the first embodiment;
Fig. 3E is a block diagram illustrating a functional configuration example of the distributor according to the first embodiment;
Fig. 4 is a sequence diagram illustrating an example of data registration processing according to the first embodiment;
Fig. 5 is a sequence diagram illustrating an example of data comparison processing according to the first embodiment;
Fig. 6 is a flowchart illustrating an example of comparison encrypted data generation processing according to the first embodiment;
Fig. 7 is an explanatory diagram illustrating a specific example of the comparison encrypted data generation processing according to the first embodiment;
Fig. 8 is a flowchart illustrating an example of encrypted query generation processing according to the first embodiment;
Fig. 9 is an explanatory diagram illustrating a specific example of the encrypted query generation processing according to the first embodiment;
Fig. 10 is a flowchart illustrating an example of comparison processing for the comparison encrypted data and the encrypted query according to the first embodiment; and
Fig. 11 is an explanatory diagram illustrating a specific example of the comparison processing for the comparison encrypted data and the encrypted query according to the first embodiment.

### DESCRIPTION OF THE PREFERRED EMBODIMENTS

Hereinafter, embodiments of the present invention are described below in detail with reference to the drawings. Note that the present invention is not limited thereto. In the embodiments, the same members are denoted by the same reference numerals in principle, and repeated description is omitted.

In a technology described in JP 2020-204731 A, a specific bit of any one of a first plaintext and a second plaintext is inverted, and then each bit of the first plaintext and the second plaintext is converted into a hash value, and magnitude comparison is performed based on such perfect matching.

Therefore, in the technology described in JP 2020-204731 A, when a value of the first plaintext is different from a value of the second plaintext after the specific bit is inverted, the hash value of the first plaintext should not be the same value as the hash value of the second plaintext or a value different from the hash value of the second plaintext only in the least significant bit (a value obtained by inverting the least significant bit).

This is because, in the technology described in JP 2020-204731 A, processing of calculating a difference between first encrypted data including the hash value of the first plaintext and second encrypted data including the hash value of the second plaintext by using an exclusive OR in "step S3704" of JP 2020-204731 A, and determining that "the plaintext (first plaintext) is larger than a query (second plaintext)" if a value of the exclusive OR is 1, "the plaintext (first plaintext) is smaller than the query (second plaintext)" if the value of the exclusive OR is 0, and "the plaintext (first plaintext) is equal to the query (second plaintext)" otherwise, in "step S3707" of JP 2020-204731 A, is performed.

Therefore, a "comparison processor" of JP 2020-204731 A needs a hash function having a large output length and collision resistance, such as secure hash algorithm (SHA)-256, such that the first encrypted data and the second encrypted data are different from each other in a case where the value of the first plaintext is different from the value of the second plaintext.

A data encryption comparison system according to the following embodiments performs evaluation processing for avoiding collision of hash values as described below while reducing a data size of encrypted data by using a compact hash function described below.

Hereinafter, terms used in the present embodiment are defined.

### (1) Pseudo Random Function

A pseudo random function is a function that outputs an unpredictable numerical string that is statistically indistinguishable from a random number for a specific input. In the following embodiments, a hash function or a compact hash function is used as an example of the pseudo random function, but in order to implement the pseudo random function, a method instead of such hash functions may be used.

### (2) Hash Function

A hash function is a compression function that outputs data of a fixed length from input data of an arbitrary length. The data output from the hash function is referred to as a hash value. In particular, in the present embodiment, a cryptographic hash function having irreversibility and collision resistance is used. The irreversibility is a property in which it is difficult to obtain input data from the hash value. The collision resistance is a property in which it is difficult to find any input data having the same hash value. Each of SHA-256, SHA-3, and the like is an example of the hash function having the irreversibility and the collision resistance.

In general, a hash function with a shorter hash value length is more likely to output the same hash value from different input values. A hash function having no collision resistance is referred to as a compact hash function in the present embodiment. For example, both a hash function that outputs only a hash value (however, the number of bits is preferably 2 or more) of a predetermined bit or less (for example, 80 bits or less) and a hash function that outputs only a hash value of a predetermined value or less are examples of the compact hash function.

The compact hash function can be created using an existing hash function. For example, an output bit length of the hash function SHA-256 is 256 bits. If a value obtained by extracting 64 bits from the 256-bit output value is used as the hash value, a compact hash function that outputs a 64-bit value can be configured. In addition, if a value obtained by extracting 32 bits from the 256-bit output value is used as the hash value, a compact hash function that outputs a 32-bit value can be configured. In addition, a result of a modulo operation described below may be used as the hash value.

Hereinafter, the compact hash function is also referred to as a CH. In addition, in a case where it is not necessary to distinguish between the compact hash function and a non-compact hash function, both the compact hash function and the non-compact hash function are simply referred to as the hash functions.

### (3) Encryption Key

A key for encrypting data is also referred to as an encryption key. The encryption key includes a secret key described below.

### (4) Secret Key

There are a secret key input to the hash function and a secret key for decrypting encrypted data. Hereinafter, the secret key is also referred to as sk without particular distinction.

### (5) Data

Data to be encrypted is also referred to as plaintext data or simply referred to as data. Encrypted plaintext data is also referred to as encrypted data.

### (6) Query

In the following embodiments, a comparison target for data is also referred to as a query. The query before encryption is also referred to as a plaintext query or simply referred to as a query. The query that is encrypted is also referred to as an encrypted query.

### (7) Exclusive OR

An exclusive OR of two bits is expressed as xor. Since a bit value is 0 or 1, an exclusive OR for the bit values is one of 0 xor 0 = 0, 0 xor 1 = 1, 1 xor 0 = 1, or 1 xor 1 = 0. In the present embodiment, the exclusive OR is also referred to as xor operation.

### (8) Modulo Operation

Calculation for obtaining a remainder when a certain integer is divided by an integer p is expressed as mod p. For example, since an integer between 0 and less than 3 is any one of 0, 1, and 2, when p is 3, a result of the modulo operation is any one of 0, 1, and 2. The modulo operation is also referred to as a mod operation.

The compact hash function can be designed by considering a value of a standard hash function such as SHA-256 as an integer and setting a remainder obtained by dividing the integer by p as the hash value.

### First Embodiment

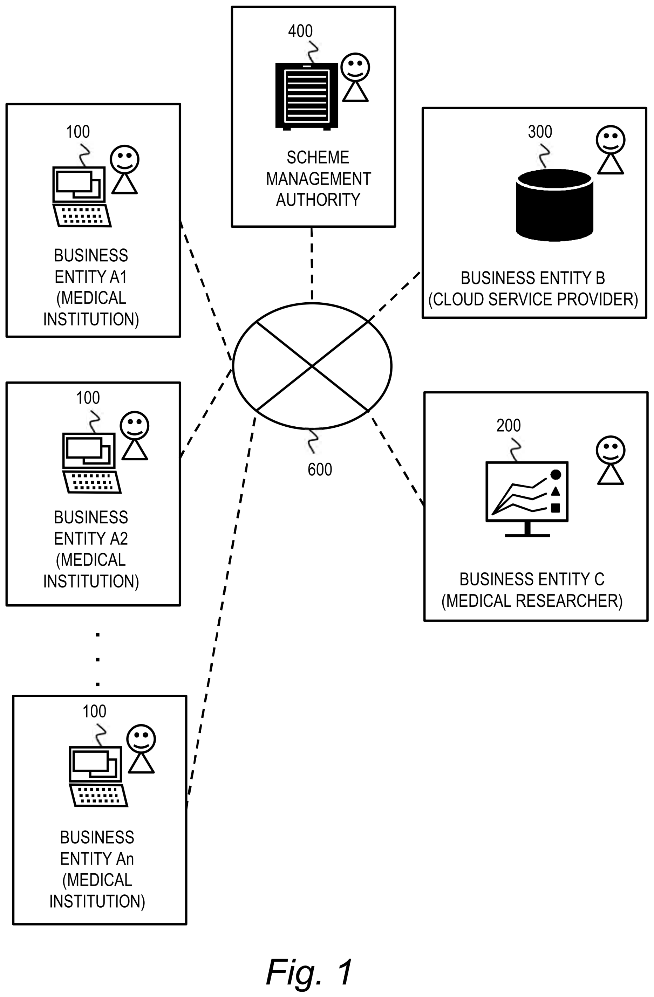

Fig. 1 is a block diagram illustrating a configuration example of an encrypted data comparison system. The encrypted data comparison system includes, for example, a distributor 400 owned by a scheme management authority, a register 100 owned by each of one or more business entities A1 to An (who manage hardware), a manager 300 owned by a business entity B (an example of a data comparator), and a viewer 200 owned by a business entity C, and the devices are connected to each other via a network 600 such as the Internet.

An application example of the encrypted data comparison system in the present embodiment to a medical examination business is described below. Hereinafter, it is assumed that each of the plurality of business entities A1 to An is a "medical institution" (an example of a first user), the business entity B is a "cloud service provider" (a user who is an example of a second user and is different from the first user), and the business entity C is a "medical researcher".

The medical institution entrusts information thereof to the manager 300 (which is an example of a cloud server) of the cloud service provider. Therefore, clinical data acquired from the medical institution is entrusted to the manager 300. Since the clinical data includes sensitive personal information possessed by the medical institution, it is necessary to carefully handle the clinical data so as not to be leaked to others.

Therefore, the register 100 encrypts data of an item designated by the medical institution in the input clinical data by using an encryption key issued by the distributor 400 of the scheme management authority, and entrusts data obtained by encrypting the designated item to the manager 300 of the cloud service provider. The data of the encrypted item of the clinical data is concealed from the cloud service provider. The manager 300 of the cloud service provider manages the clinical data in an encrypted state.

When the medical researcher needs the clinical data, the medical researcher requests the manager 300 of the cloud service provider to transmit the clinical data by using the viewer 200. The viewer 200 generates an encrypted query for searching for necessary clinical data, and includes the encrypted query in the request. The manager 300 of the cloud service provider compares the encrypted data with the encrypted query, and extracts the encrypted data required by the medical researcher based on a comparison result.

Some devices included in the encrypted data comparison system may be integrated. Specifically, for example, the manager 300 and any one of one or more registers 100 may be integrated. Communication between terminals integrated in this manner is omitted.

In addition, as long as various keys, various hash functions, various algorithms, various parameters, and the like required by each of the register 100, the viewer 200, and the manager 300 are given in advance, the encrypted data comparison system does not have to include the distributor 400.

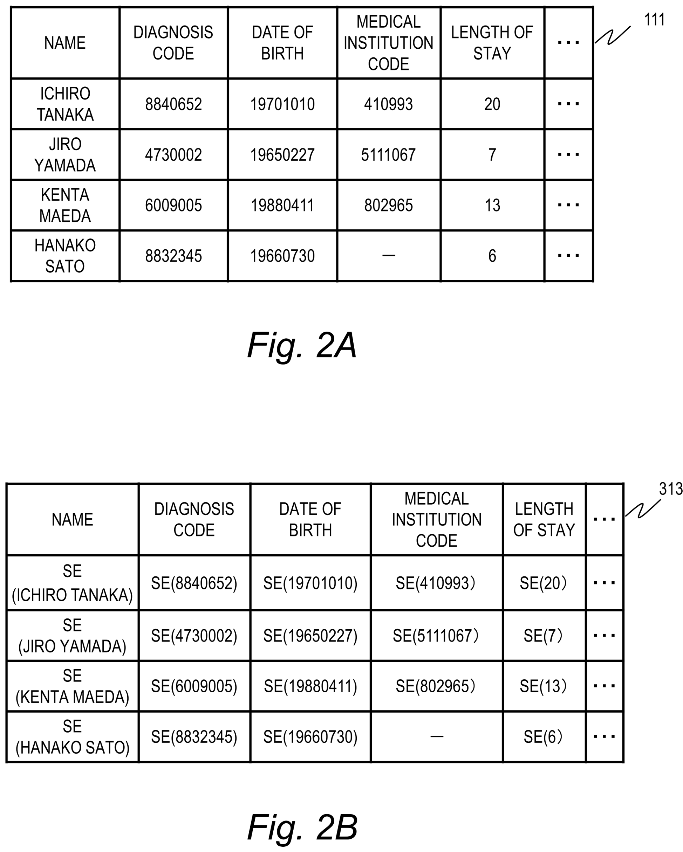

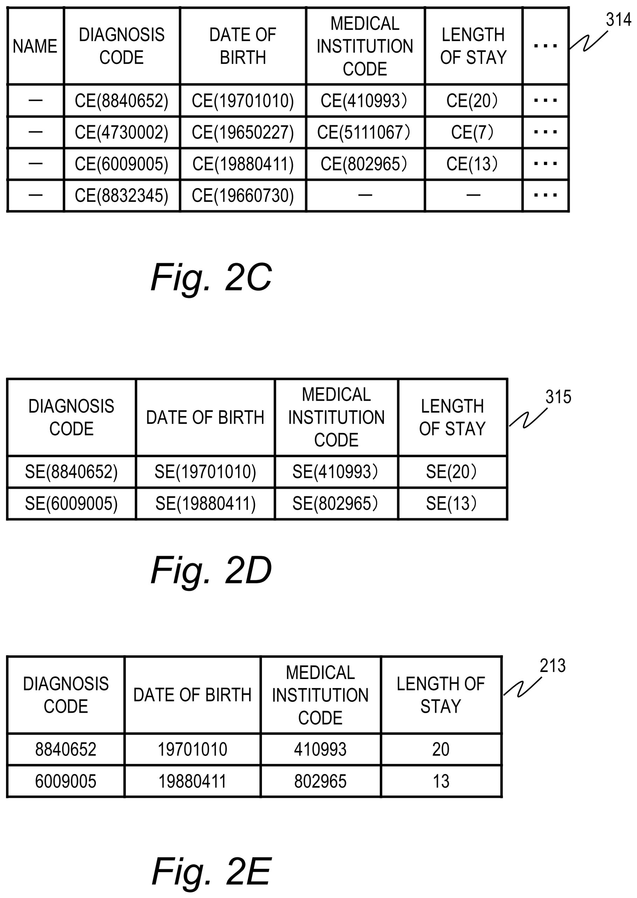

Specific examples of data handled in the first embodiment are illustrated in Figs. 2A, 2B, 2C, 2D, and 2E.

Fig. 2A is a diagram illustrating a data configuration example of clinical data 111 registered in the register 100 by the medical institution. The clinical data 111 holds a value of each item as a plaintext. Data in each row of the clinical data 111 is also referred to as "individual clinical data". "-" in the data indicates a missing value or a blank portion.

The encrypted data created by encrypting the clinical data 111 includes standard encrypted data 313 and comparison encrypted data 314.

Fig. 2B is a diagram illustrating a data configuration example of the standard encrypted data 313. The standard encrypted data 313 of Fig. 2B is data in which a value of each item of the clinical data 111 of Fig. 2A is encrypted using a predetermined encryption method. In the present embodiment, a public-key encryption method or a symmetric-key encryption method standardized by a public organization, an association, or the like is used as the predetermined encryption method, but any encryption method can be adopted as the predetermined encryption method. Hereinafter, the standardized public-key encryption method and the standardized symmetric-key encryption method are also simply referred to as standard encryption.

The distributor 400 of the scheme management authority issues the encryption key, and the register 100 of the medical institution encrypts the individual clinical data by using the issued encryption key to generate the standard encrypted data 313. However, the register 100 does not have to encrypt the missing value and the blank portion in the clinical data 111.

Furthermore, in the example of Fig. 2B, all values other than the missing value or the blank portion are encrypted, but the register 100 does not have to encrypt some values of the clinical data 111 when generating the standard encrypted data 313. Specifically, for example, when generating the standard encrypted data 313, it is sufficient if the register 100 encrypts only a value of an item or a cell designated by the user (medical institution) of the register 100 among the values included in the clinical data 111.

Furthermore, for example, when generating the standard encrypted data 313, the register 100 may change any value (for example, the value of the item or the cell designated by the user (medical institution) of the register 100) that is neither the missing value nor the blank portion in the clinical data 111 to the missing value or the blank portion.

Data in each row of the standard encrypted data 313 is also referred to as "individual clinical data encrypted by the standard encryption". SE in Fig. 2B is an abbreviation of standard encryption. SE(x) indicates a value obtained by encrypting a value x using the standard encryption.

Fig. 2C is a diagram illustrating a data configuration example of the comparison encrypted data 314. The comparison encrypted data 314 of Fig. 2C is data obtained by encrypting the value of each item of the clinical data 111 of Fig. 2A using a comparable encryption method.

Data in each row of the comparison encrypted data 314 is also referred to as "individual clinical data encrypted by comparable encryption". CE is an abbreviation of comparable encryption. CE(x) indicates a value obtained by encrypting the value x using the comparable encryption. It is possible to compare a magnitude of the value x in the encrypted state by CE(x) encrypted by the comparable encryption.

Furthermore, in the example of Fig. 2C, all values other than the missing value or the blank portion are encrypted, but the register 100 does not have to encrypt some values of the clinical data 111 when generating the standard encrypted data 313. Specifically, for example, when generating the standard encrypted data 313, it is sufficient if the register 100 encrypts only a value of an item or a cell designated by the user (medical institution) of the register 100 among the values included in the clinical data 111.

Furthermore, for example, when generating the standard encrypted data 313, the register 100 may change any value (for example, the value of the item or the cell designated by the user (medical institution) of the register 100) that is neither the missing value nor the blank portion in the clinical data 111 to the missing value or the blank portion. In the example of Fig. 2C, the comparison encrypted data 314 does not hold a ciphertext of a name.

Both the standard encrypted data 313 and the comparison encrypted data 314 are merely examples, and may be generated by combining a plurality of encryption methods as necessary. For example, the standard encrypted data 313 and the comparison encrypted data 314 may be generated by encrypting the clinical data 111 for each item by different methods such as block encryption, searchable encryption, and public-key encryption.

Fig. 2D is a diagram illustrating a data configuration example of a transmission standard encrypted data 315 extracted by the manager 300. The manager 300 performs comparative determination for the encrypted query generated by the viewer 200 and the comparison encrypted data 314 in the item designated by the user (medical researcher) of the viewer 200, and extracts a record satisfying a search condition indicated by the encrypted query from the standard encrypted data 313 according to a result of the comparative determination. The transmission standard encrypted data 315 in Fig. 2D includes the record extracted from the standard encrypted data 313 in this manner.

The manager 300 preferably holds information for associating a record of the standard encrypted data 313 with a record of the comparison encrypted data 314, the records being generated from the same plaintext. As a result, the manager 300 can extract a record satisfying the search condition indicated by the encrypted query from the comparison encrypted data 314 by using the result of the comparative determination for the encrypted query generated by the viewer 200 and the comparison encrypted data 314 and can easily extract the record corresponding to the extracted record from the standard encrypted data 313.

In the example of Fig. 2D, a record with a date of birth of 1980 or later or a length of stay of 20 days or more is selected by the comparative determination, and a diagnosis code, a date of birth, a medical institution code, and a length of stay in the record are extracted.

Fig. 2E is a diagram illustrating a data configuration example of decrypted clinical data 213 decrypted by the viewer 200. The decrypted clinical data 213 in Fig. 2E is an example in which the transmission standard encrypted data 315 in Fig. 2D is decrypted. When the viewer 200 outputs the decrypted clinical data 213 (for example, display), the decrypted clinical data 213 is provided to the medical researcher.

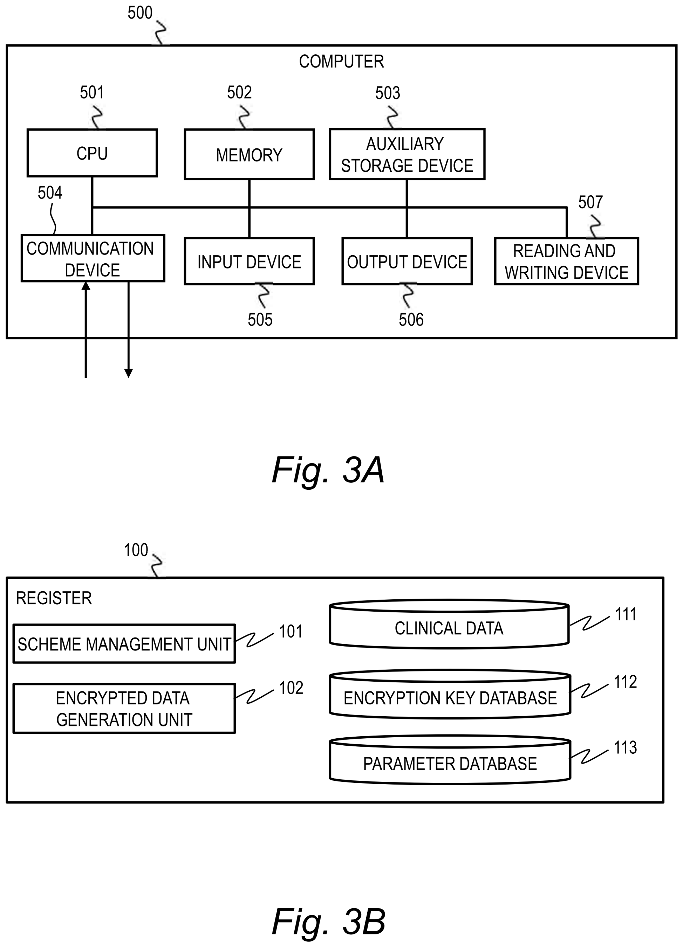

Fig. 3A is a block diagram illustrating a hardware configuration example of a computer implementing each of the register 100, the viewer 200, the manager 300, and the distributor 400. The computer 500 includes, for example, a central processing unit (CPU) 501, a memory 502, an auxiliary storage device 503, a communication device 504, an input device 505, an output device 506, and a reading and writing device 507 connected to one another by an internal communication line such as a bus.

The CPU 501 is an example of a processor, and executes a program stored in the memory 502. As an example of the processor, the CPU 501 or a graphics processing unit (GPU) can be considered, but another semiconductor device may be used as long as the device is an entity that executes predetermined processing.

The memory 502 includes a read only memory (ROM) that is a nonvolatile storage element and a random access memory (RAM) that is a volatile storage element. The ROM stores an invariable program (for example, BIOS) and the like. The RAM is a high-speed and volatile storage element such as a dynamic random access memory (DRAM), and temporarily stores a program executed by the CPU 501 and data used when the program is executed.

The auxiliary storage device 503 is, for example, a large-capacity and nonvolatile storage device such as a magnetic storage device (HDD) or a flash memory (solid state drive (SSD)), and stores a program to be executed by the CPU 501 and data used when the program is executed. That is, the program is read from the auxiliary storage device 503, loaded into the memory 502, and executed by the CPU 501.

The input device 505 is a device that receives an input from an operator, such as a keyboard or a mouse. The output device 506 is a device that outputs an execution result of the program in a format that can be visually recognized by the operator, such as a display device or a printer.

The communication device 504 is a network interface device that controls communication with other devices according to a predetermined protocol. Furthermore, the communication device 504 may include, for example, a serial interface such as a universal serial bus (USB).

The reading and writing device 507 reads data from a removable medium (CD-ROM, flash memory, or the like) and writes data to the removable medium. The program executed by the CPU 501 is provided to the computer 500 via the removable medium or the network 600 and stored in the nonvolatile auxiliary storage device 503 which is a non-transitory storage medium.

Each device included in the encrypted data comparison system is provided with, for example, a program set including one or more programs executed by the CPU included in the device. The program set may include a common program executed in some or all of the devices included in the encrypted data comparison system, or may include a program dedicated to each device. Specifically, for example, the program set includes a first program for the register 100, a second program for the viewer 200, and a third program for the manager 300. Furthermore, for example, the program set may include a first common program executed by the register 100, the viewer 200, and the manager 300. Furthermore, for example, the program set may include a second common program executed by two devices among the register 100, the viewer 200, and the manager 300, and a program for the remaining one device (that is, any one of the first program, the second program, and the third program).

Each of the register 100, the viewer 200, the manager 300, and the distributor 400 is a computer system implemented physically on one computer 500 or on a plurality of computers 500 configured logically or physically, and may operate on separate threads on the same computer 500 or may operate on a virtual computer constructed on a plurality of physical computer resources.

In each embodiment, data used by the encrypted data comparison system may be expressed by any data structure without depending on the data structure. For example, a data structure appropriately selected from among a table, a list, a database, and a queue may store the data. In addition, some or all of data used by each device included in the encrypted data comparison system may be stored in an external device connected to the corresponding device.

Fig. 3B is a block diagram illustrating a functional configuration example of the register 100. The register 100 includes, for example, a scheme management unit 101 and an encrypted data generation unit 102, both of which are functional units. The scheme management unit 101 and the encrypted data generation unit 102 are included in, for example, the CPU 501 of the computer 500 implementing the register 100.

The scheme management unit 101 manages the encryption key and the like for encrypting data. The encrypted data generation unit 102 generates the encrypted data from plaintext data.

For example, the CPU 501 of the computer 500 implementing the register 100 functions as the scheme management unit 101 by operating according to a scheme management program loaded into the memory 502 of the computer 500 implementing the register 100, and functions as the encrypted data generation unit 102 by operating according to an encrypted data generation program loaded into the memory 502 of the computer 500 implementing the register 100. Functional units included in other devices included in the encrypted data comparison system also have the same relationship among the functional units, the CPU 501, and the program.

Some or all of functions of the functional units of the device included in the encrypted data comparison system may be implemented by dedicated hardware such as an application specific integrated circuit (ASIC) or a field-programmable gate array (FPGA), for example.

The register 100 holds, for example, the clinical data 111, an encryption key database 112, and a parameter database 113. The clinical data 111, the encryption key database 112, and the parameter database 113 are stored in the memory 502 and/or the auxiliary storage device 503 of the computer 500 implementing the register 100.

The clinical data 111 includes the plaintext data to be encrypted. The encryption key database 112 holds the encryption key received from the distributor 400. The parameter database 113 holds a parameter received from the distributor 400.

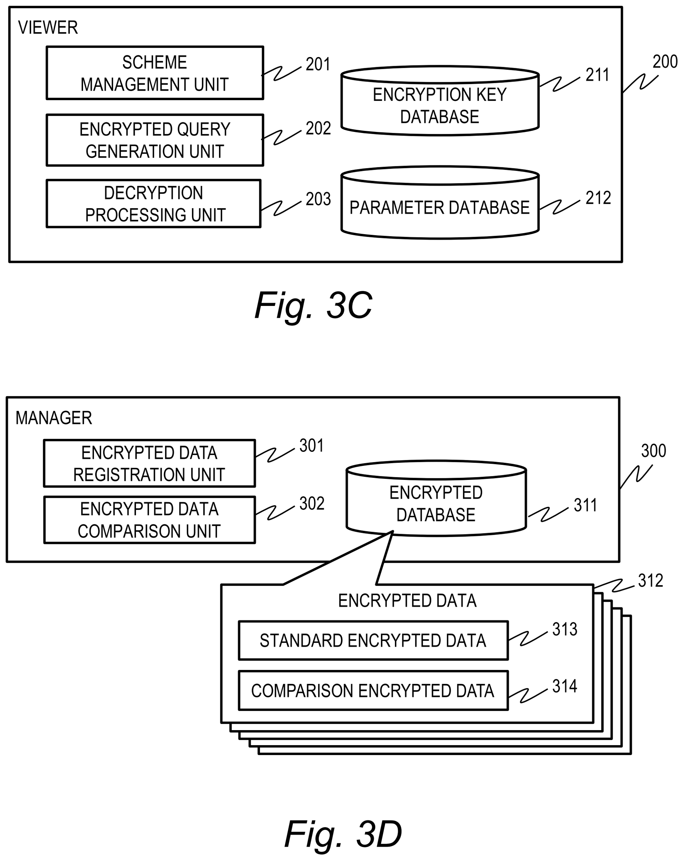

Fig. 3C is a block diagram illustrating a functional configuration example of the viewer 200. The viewer 200 includes, for example, a scheme management unit 201, an encrypted query generation unit 202, and a decryption processing unit 203, all of which are functional units. The scheme management unit 201, the encrypted query generation unit 202, and the decryption processing unit 203 are included in the CPU 501 of the computer 500 implementing the viewer 200.

The scheme management unit 201 manages the encryption key and the like. The encrypted query generation unit 202 generates the encrypted query for comparison with the encrypted data. The decryption processing unit 203 decrypts the encrypted data received from the manager 300.

The viewer 200 holds, for example, an encryption key database 211 and a parameter database 212. The encryption key database 211 and the parameter database 212 are stored in the memory 502 and/or the auxiliary storage device 503 of the computer 500 implementing the viewer 200. The encryption key database 211 holds the encryption key received from the distributor 400. The parameter database 212 holds a parameter received from the distributor 400.

Fig. 3D is a block diagram illustrating a functional configuration example of the manager 300. The manager 300 includes, for example, an encrypted data registration unit 301 and an encrypted data comparison unit 302, both of which are functional units. The encrypted data registration unit 301 and the encrypted data comparison unit 302 are included in the CPU 501 of the computer 500 implementing the manager 300.

The encrypted data registration unit 301 registers the encrypted data received from the register 100 in the encrypted database 311. The encrypted data comparison unit 302 compares the comparison encrypted data 314 received from the register 100 with the encrypted query received from the viewer 200. After the comparison, the encrypted data comparison unit 302 extracts corresponding data from the standard encrypted data 313 as the transmission standard encrypted data 315 and provides the extracted data to the viewer 200.

The manager 300 holds, for example, an encrypted database 311. The encrypted database 311 is stored in the memory 502 and/or the auxiliary storage device 503 of the computer 500 implementing the manager 300. The encrypted database 311 holds one or more pieces of encrypted data 312. The encrypted data 312 includes the standard encrypted data 313 and the comparison encrypted data 314.

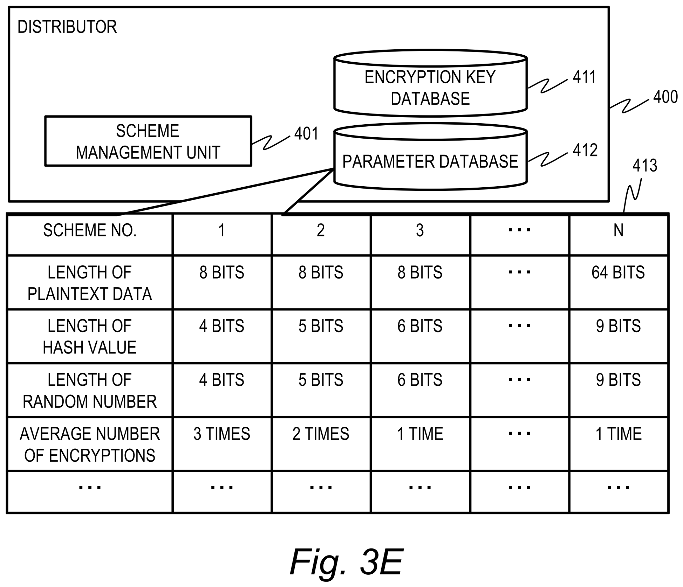

Fig. 3E is a block diagram illustrating a functional configuration example of the distributor 400. The distributor 400 includes, for example, a scheme management unit 401 which is a functional unit. The scheme management unit 401 is included in the CPU 501 of the computer 500 implementing the distributor 400. The scheme management unit 401 manages, in an encryption key database 411 and a parameter database 412, the encryption key and the parameter used for comparison encrypted data generation processing, encrypted query generation processing, and comparison processing for the comparison encrypted data and the encrypted query, respectively.

The distributor 400 holds the encryption key database 411 and the parameter database 412. The encryption key database 411 and the parameter database 412 are stored in the memory 502 and/or the auxiliary storage device 503 of the distributor 400. The encryption key database 411 holds various encryption keys (and decryption keys). The parameter database 412 manages, for example, the parameter of a cryptographic primitive, represented by a hash function, for each scheme.

In the example of Fig. 3E, the parameter database 412 holds a scheme list 413. In the scheme list 413, a combination of the parameters used for generating the comparison encrypted data is managed for each scheme number. In the scheme list 413, a length of the plaintext data, a length of a hash value, a length of a random number, an average number of encryptions, and the like are defined for each scheme number.

The length of the plaintext data in the scheme list 413 indicates the length of the plaintext data to be encrypted in the comparison encrypted data generation processing described below. The length of the hash value in the scheme list 413 indicates the length of the hash value output by a compact hash function used for the comparison encrypted data generation processing. The length of the random number in the scheme list 413 indicates the length of the random number generated in the comparison encrypted data generation processing. The average number of encryptions in the scheme list 413 indicates the average number of encryptions performed in the comparison encrypted data generation processing.

Although not illustrated, the parameter database 412 stores the encryption method and the parameter used for the standard encrypted data.

In the scheme described above, the shorter the length of the plaintext data, and the longer the length of the hash value (the length of the random number) from the compact hash function, the smaller the average number of encryptions. On the other hand, the longer the length of the plaintext data, the larger the amount of information that can be expressed by one plaintext, and the shorter the length of the hash value from the compact hash function, the smaller the data size of the comparison encrypted data.

Hereinafter, an example of processing performed by the encrypted data comparison system is described. The processing performed by the encrypted data comparison system includes data registration processing and data comparative determination processing.

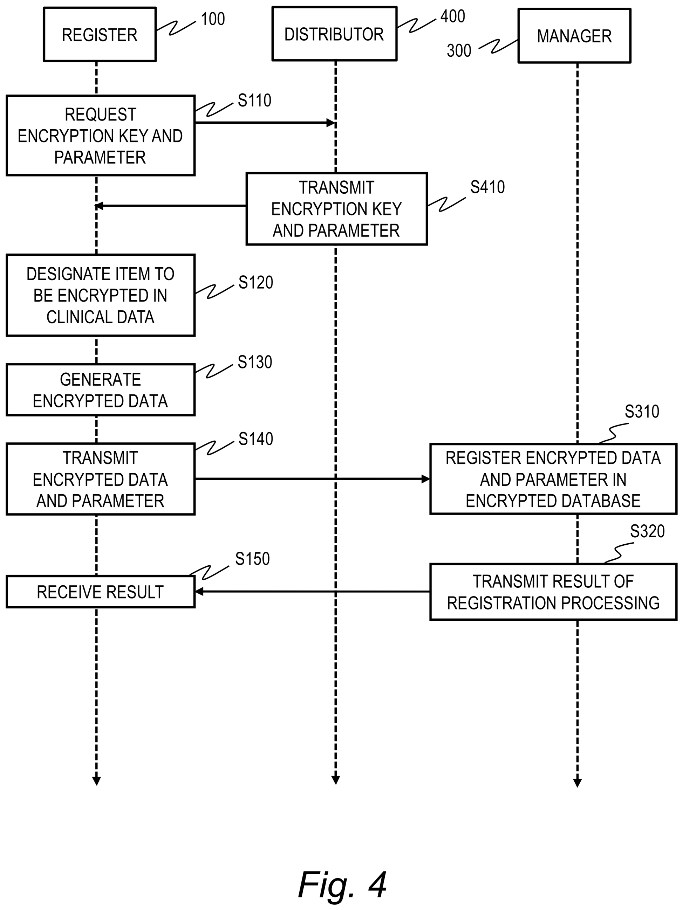

Fig. 4 is a sequence diagram illustrating an example of the data registration processing. The scheme management unit 101 of the register 100 requests the distributor 400 to transmit the encryption key (the encryption key used for standard encrypted data generation processing and an encryption key used for the comparison encrypted data generation processing) and the parameter (S110).

In step S110, for example, the scheme management unit 401 of the distributor 400 may transmit the scheme list 413 to the register 100, and the scheme management unit 101 of the register 100 may display the scheme list 413 on the output device 506 of the register 100, select a scheme according to an input to the input device 505 of the register 100, and request transmission of the parameter for encryption for comparison corresponding to the selected scheme. As a result, it is possible to select a scheme that satisfies the needs of the user of the register 100.

The register 100 may use a predetermined scheme without selecting a scheme. In this case, necessary various algorithms, various hash functions, and the like are shared in advance among the register 100, the viewer 200, and the manager 300.

According to the request in step S110, the scheme management unit 401 of the distributor 400 acquires the encryption key (the encryption key used for the standard encrypted data generation processing and the encryption key used for the comparison encrypted data generation processing) from the encryption key database 211, acquires the parameter (the scheme for generating the comparison encrypted data and the parameter for generating the standard encrypted data) from the parameter database 212, and transmits the acquired encryption key and the acquired parameter to the register 100 (S410).

In step S410, the scheme management unit 101 of the register 100 stores the received encryption key and the received parameter in the encryption key database 112 and the parameter database 113, respectively. The encryption key and the scheme to be transmitted to the register 100 may be determined according to an input to the input device 505 of the distributor 400, or may be determined in advance.

The encrypted data generation unit 102 of the register 100 designates an item (comparison item) to be encrypted in the clinical data 111 (S120). Specifically, for example, the encrypted data generation unit 102 designates the item to be encrypted according to an input to the input device 505 of the register 100. In the example of the clinical data 111 in Fig. 2A described above, the encrypted data generation unit 102 designates, for example, the "date of birth", the "length of stay", or the like as the comparison item to be encrypted. The data to be encrypted is an example of a numerical value to be registered.

The encrypted data generation unit 102 of the register 100 generates the encrypted data including the standard encrypted data and the comparison encrypted data by using the encryption key transmitted in step S110 (S130). The standard encrypted data is generated by encrypting the clinical data 111 with, for example, standard public-key encryption such as Rivest-Shamir-Adleman (RSA) cryptosystem or elliptic curve cryptography (ECC) or standard symmetric-key encryption such as advanced encryption standard (AES).

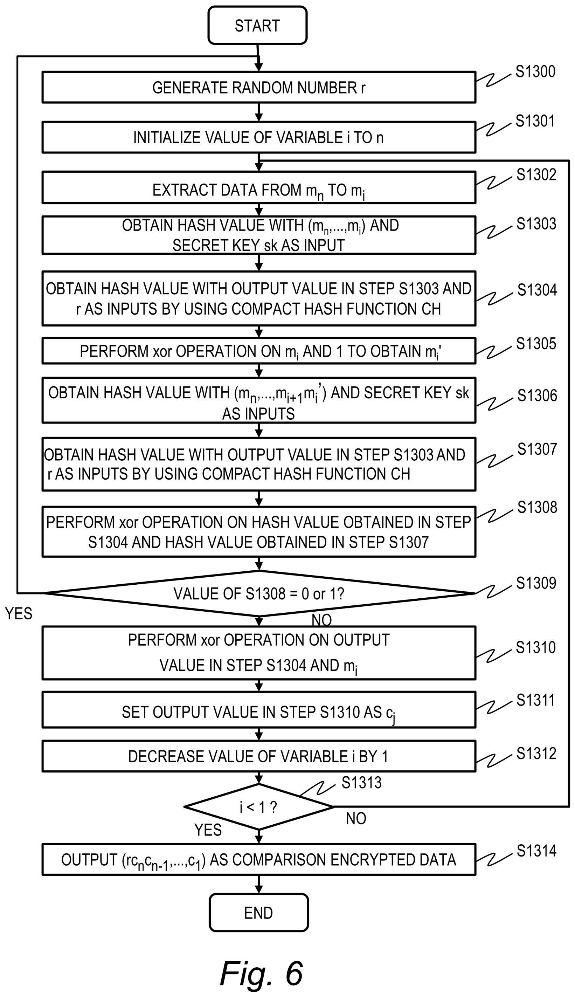

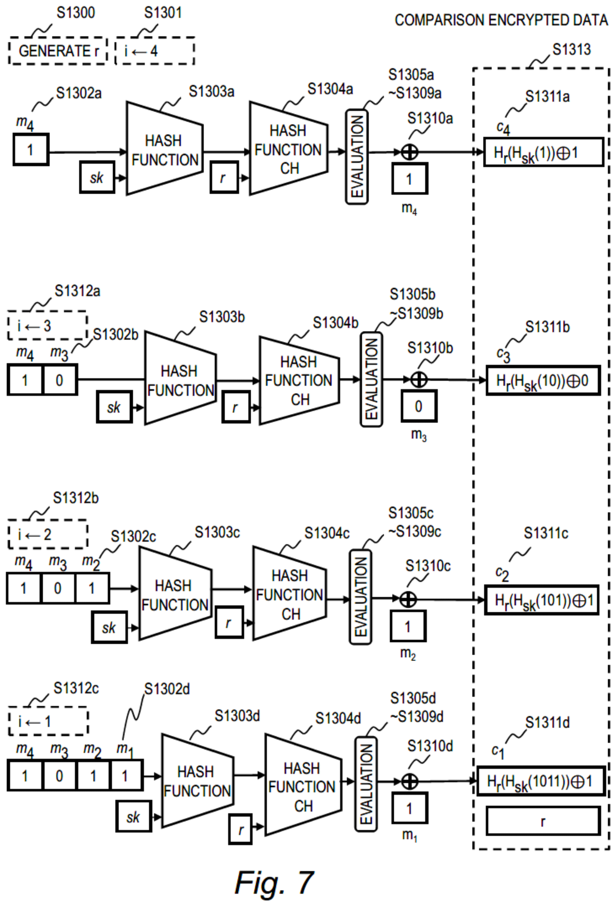

In step S130, the encrypted data generation unit 102 generates the standard encrypted data by using the encryption key for generating the standard encrypted data, which is received in step S110, according to the parameter for generating the standard encrypted data, which is received in step S110. Further, details of the comparison encrypted data generation processing performed in step S130 are described below with reference to Figs. 6 and 7.

The encrypted data generation unit 102 transmits the encrypted data including the comparison encrypted data and the standard encrypted data, which is generated in step S130 to the manager 300 (S140). The encrypted data registration unit 301 of the manager 300 registers the encrypted data transmitted in step S140 in the encrypted database 311 (S310). The encrypted data registration unit 301 transmits a result of the registration processing in step S310 (for example, information indicating whether or not the registration is successful is included) to the register 100 (S320). The register 100 receives the result of the registration processing transmitted in step S320 (S150).

A procedure of the data registration processing described above is merely an example, and a processing order and a processing content may change as necessary. For example, in a case where the register 100 and the distributor 400 belong to the same entity or are integrated devices, some steps of processing may be omitted. For example, the distributor 400 does not transmit the encryption key to the register 100, and the register 100 may have the encryption key in advance.

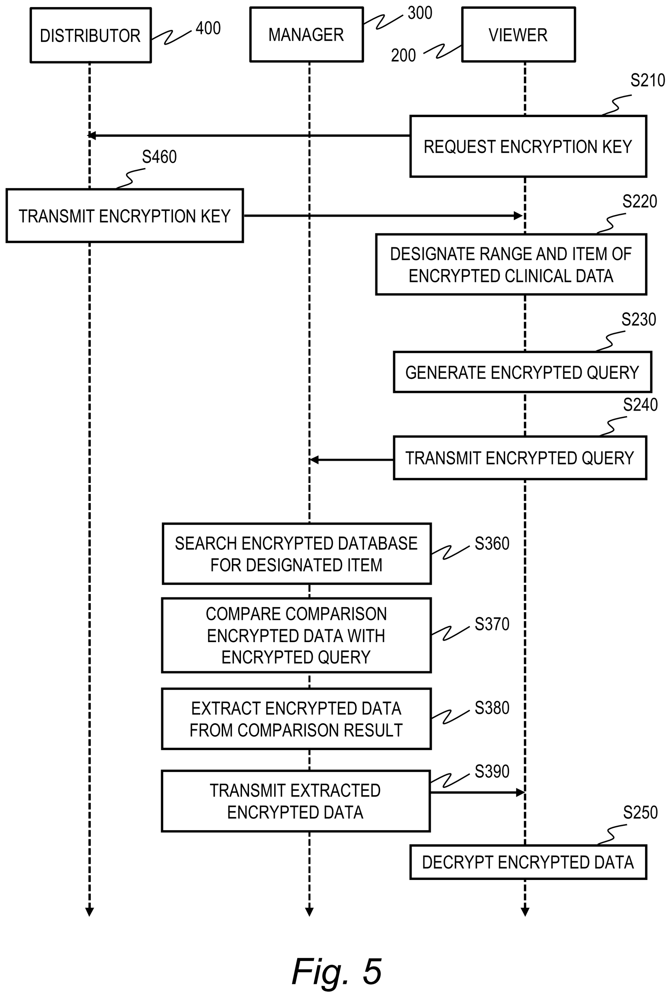

Fig. 5 is a sequence diagram illustrating an example of data comparison processing. The scheme management unit 201 of the viewer 200 requests the distributor 400 for the encryption key (S210). The encryption key requested in step S210 includes the encryption key used to generate the comparison encrypted data and a decryption key for decrypting the standard encrypted data (which is the same as the encryption key in the case of symmetric-key encryption).

According to the request in step S210, the scheme management unit 401 of the distributor 400 selects the encryption key from the encryption key database 411 and transmits the encryption key to the viewer 200 (S460). In step S460, the scheme management unit 201 of the viewer 200 stores the received encryption key in the encryption key database 211.

The encrypted query generation unit 202 of the viewer 200 designates the item and the magnitude of the encrypted clinical data, for example, according to an input to the input device 505 of the viewer 200 (S220). For the example of the clinical data 111 including the items such as the "date of birth" and the "length of stay" illustrated in Fig. 2A, in step S220, for example, a condition regarding a magnitude relationship between an attribute and a numerical value, such as the "length of stay of 20 days or more" or the "date of birth of 1970 or later", is designated. A query to be encrypted is an example of a numerical value to be compared.

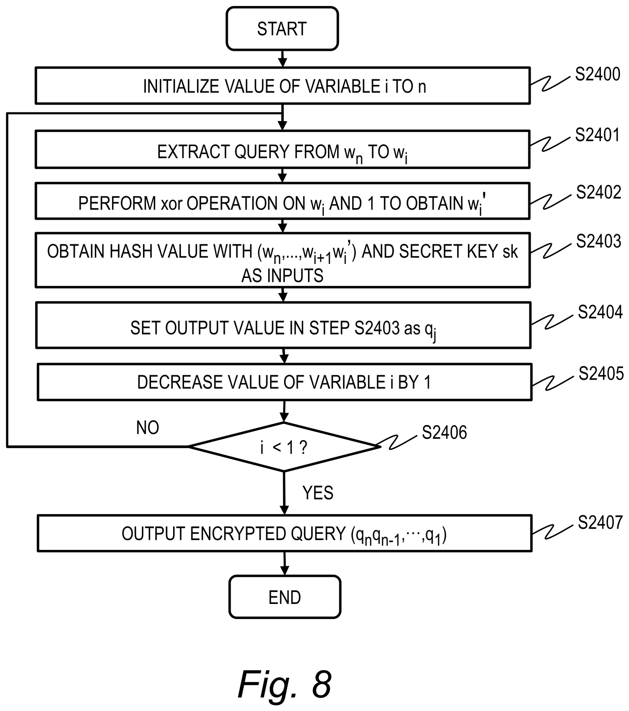

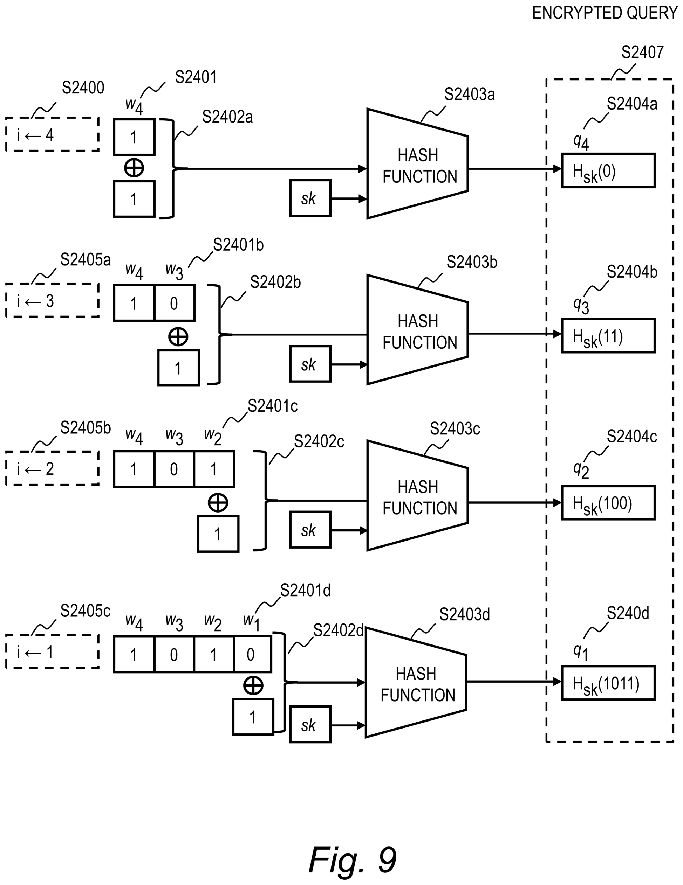

The encrypted query generation unit 202 generates request data for requesting for the item and the magnitude of the numerical value designated in step S220, and encrypts the request data by using the encryption key and the parameter transmitted in step S460 (S230). Details of the encrypted query generation processing in step S230 are described below with reference to Figs. 8 and 9. Hereinafter, the request data generated in step S230 is also referred to as the query, and the query that is encrypted is also referred to as the encrypted query. The encrypted query generation unit 202 transmits the encrypted query generated in step S230 to the manager 300 (S240).

The encrypted data comparison unit 302 of the manager 300 searches the comparison encrypted data in the encrypted data stored in the encrypted database 311 for the item designated in the encrypted query (S360). For example, in the example of Fig. 2A, in a case where the items such as the "date of birth" and the "length of stay" are designated, the encrypted data comparison unit 302 extracts the comparison encrypted data related to the "date of birth" and the "length of stay" as comparison targets for the encrypted query.

The encrypted data comparison unit 302 compares the comparison encrypted data with the encrypted query for the item of the clinical data designated by the encrypted query, and obtains a comparison result indicating a magnitude determination result of the comparison encrypted data and the encrypted query for the item (S370).

The encrypted data comparison unit 302 extracts the encrypted data corresponding to the item designated by the encrypted query and the magnitude of the numerical value based on the comparison result of step S370 (S380). At this time, the encrypted data comparison unit 302 may extract both the comparison encrypted data and the standard encrypted data corresponding to the item designated by the encrypted query and the magnitude of the numerical value, or may extract only the standard encrypted data corresponding to the item designated by the encrypted query and the magnitude of the numerical value.

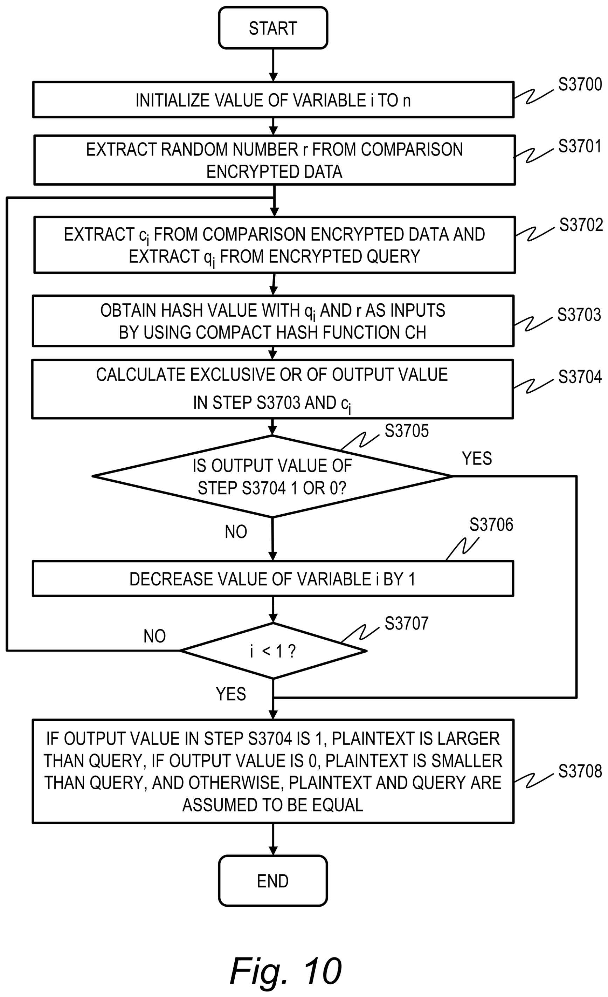

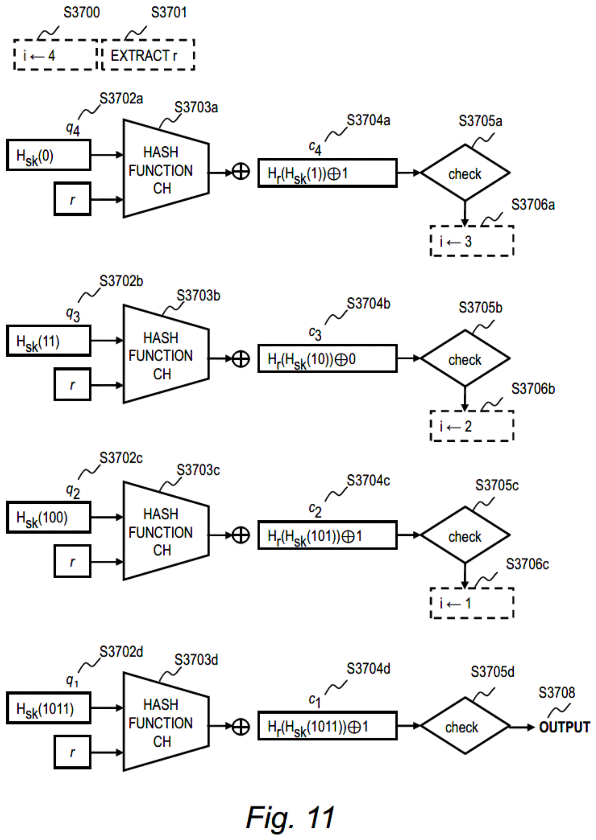

For example, in a case where the extraction of data satisfying the condition that the length of stay is "20 days or more" or the date of birth is "1970 or later" is requested in the encrypted query, the encrypted data comparison unit 302 extracts the transmission standard encrypted data 315 of Fig. 2D from the comparison encrypted data 314 of Fig. 2C according to the request. Details of the data comparison processing in step S370 are described below with reference to Figs. 10 and 11.

The encrypted data comparison unit 302 transmits the encrypted data extracted in step S380 to the viewer 200 (S390). The decryption processing unit 203 of the viewer 200 decrypts the transmitted standard encrypted data by using the decryption key transmitted in step S460 (S250). With the above processing, the viewer 200 can acquire desired data without disclosing the plaintext of the clinical data 111 to the manager 300.

In the above example, the viewer 200 decrypts the standard encrypted data. However, the viewer 200 may also decrypt the comparison encrypted data. However, the standard encrypted data has a smaller data size than the comparison encrypted data, so that the viewer 200 can perform decryption at a higher speed.

A procedure of the data comparison processing described above is merely an example, and a processing order and a processing content may change as necessary. For example, in a case where the viewer 200 and the distributor 400 belong to the same entity or are integrated devices, some steps of processing may be omitted. For example, the distributor 400 does not transmit the encryption key to the viewer 200, and the viewer 200 may have the encryption key in advance.

Fig. 6 is a flowchart illustrating an example of the comparison encrypted data generation processing in step S130. First, it is assumed that the data is n-bit data, and the n-bit data is represented by a symbol (mₙmₙ₋₁,...,m₁). mₙ is the most significant bit of the data, and m₁ is the least significant bit of the data. A value of each bit of the data is 0 or 1. In a case where the number of bits of the data is less than n, the encrypted data generation unit 102 converts the data into n-bit data by, for example, performing a predetermined padding operation (for example, zero-padding) in advance.

The encrypted data generation unit 102 generates a (pseudo) random number r (for example, 128 bits) (S1300). The encrypted data generation unit 102 initializes a value of the variable i to n (S1301). The encrypted data generation unit 102 extracts the data from mₙ to mᵢ (S1302).

The encrypted data generation unit 102 inputs a value obtained by concatenating mₙmₙ₋₁,...,mᵢ (an example of a first bit string) and the encryption key (hereinafter, the encryption key is referred to as a secret key sk) received from the distributor 400 in step S410 to a hash function to obtain a hash value (an example of a first hash value) (S1303).

The hash function in step S1303 is shared in advance among the register 100, the viewer 200, and the manager 300, for example. Furthermore, for example, the hash function usable in step S1303 may be defined in the scheme list 413, and the hash function selected by the register 100 in step S410 may be shared among the register 100, the viewer 200, and the manager 300.

The steps of processing in steps S1302 to S1313 are performed once or more in a loop, but the same hash function is used every time in step S1303 performed in each loop. The loop is an example of encryption processing for the i-th bit mᵢ of the data to be encrypted. In addition, the hash function (an example of a first hash function) used in step S1303 may be a compact hash function or a non-compact hash function. The hash function used in step S1303 may be the same as or different from a hash function (an example of a second hash function) used in step S1304.

The encrypted data generation unit 102 inputs a value obtained by concatenating the hash value obtained in the latest step S1303 and the random number r generated in the latest step S1300 to a compact hash function CH to obtain a hash value (an example of a second hash value) (S1304).

For example, the compact hash function that can be used in step S1304 is defined in association with a length of the hash value in the scheme list 413, and the hash function corresponding to the length of the hash value indicated by the scheme selected by the register 100 in step S410 is shared between the register 100 and the manager 300.

The steps of processing in steps S1302 to S1313 are performed once or more in a loop, but the same compact hash function CH is used every time in step S1304 performed in each loop.

Steps S1305 to S1309 are evaluation processing performed to evaluate whether or not the hash value generated in step S1304 is appropriate. In step S1309, if the hash value obtained by the compact hash function and generated in step S1304 is evaluated to be inappropriate, the processing returns to step S1300. In this way, the hash value obtained by the compact hash function is generated again, and the processing is repeated until the hash value is evaluated to be appropriate in step S1309.

As described above, there is a possibility that the processing returns from step S1309 to step S1300 and the processing from step S1300 loops, and an average value of the number of times a series of processing starting from step S1300 is performed is the "average number of encryptions" illustrated in the scheme list 413 in Fig. 3E.

The encrypted data generation unit 102 calculates mᵢ xor 1 (that is, a bit value of mᵢ is inverted, and if the original mᵢ is 0, the bit value changes to 1, and if the original mᵢ is 1, the bit value changes to 0), and stores the calculated value as mᵢ' (S1305).

The encrypted data generation unit 102 obtains a hash value (an example of a fifth hash value) by inputting a value obtained by concatenating mₙmₙ₋₁, ...mᵢ' (an example of a fourth bit string) and the secret key sk received from the distributor 400 in step S410 to the hash function used in step S1303 (S1306).

The encrypted data generation unit 102 inputs a value obtained by concatenating the hash value obtained in the latest step S1306 and the random number r generated in the latest step S1300 to a compact hash function CH to obtain a hash value (an example of a sixth hash value) (S1307). The steps of processing in steps S1302 to S1313 are performed once or more in a loop, but the same function is used as the compact hash function of steps S1304 and S1307 performed in each loop.

The encrypted data generation unit 102 calculates an exclusive OR (an example of a third exclusive OR) of the hash value obtained in the latest step S1304 and the hash value obtained in the latest step S1307 (S1308).

The encrypted data generation unit 102 determines whether or not a value of the exclusive OR calculated in step S1308 is 0 or 1 (an integer (or natural number) of 0 or 1, that is, a bit string in which values of all bits are 0, or a bit string in which only a value of the least significant bit is 1 and values of all the other bits are 0) (S1309).

In a case where the encrypted data generation unit 102 determines that the value of the exclusive OR calculated in step S1308 is 0 or 1 (S1309: YES), the processing returns to step S1302. In a case where the encrypted data generation unit 102 determines that the value of the exclusive OR calculated in step S1308 is neither 0 nor 1 (S1309: NO), the processing proceeds to step S1310.

The encrypted data generation unit 102 performs an xor operation on the hash value obtained in the latest step S1304 and mᵢ (a bit string in which a value of the least significant bit is mᵢ, and values of all other bits are 0) (that is, a result of magnitude comparison between the plaintext data and the plaintext query is embedded in the comparison encrypted data in advance), and stores a result of the xor operation (an example of a first exclusive OR) (S1310).

The encrypted data generation unit 102 stores an output value in the latest step S1310 as cⱼ (S1311). The encrypted data generation unit 102 decreases the value of the variable i by 1 (S1312). The encrypted data generation unit 102 determines whether or not the value of the variable i after the decrement is less than 1 (S1313).

In a case where the encrypted data generation unit 102 determines that the value of the variable i after the decrement is 1 or more (S1313: NO), the processing returns to step S1302. In a case where the encrypted data generation unit 102 determines that the value of the variable i after the decrement is less than 1 (S1313: YES), the encrypted data generation unit 102 generates and outputs the comparison encrypted data (rcₙcₙ₋₁,...,c₁) from the random number r generated in the latest step S1300 and the n number of cⱼ created in the latest step S1311 performed n times (S1314), and ends the comparison encrypted data generation processing.

In the processing illustrated in Fig. 6, since the compact hash function is used to generate the comparison encrypted data, the data size of the comparison encrypted data can be reduced. On the other hand, the use of the compact hash function increases a possibility of collision of the hash values as compared with a case where the non-compact hash function is used, and search accuracy may be deteriorated. The deterioration in search accuracy here means that a probability of extracting the encrypted data that does not meet the condition indicated by the encrypted query increases.

Therefore, in the evaluation processing in steps S1305 to S1309, the encrypted data generation unit 102 compares the hash values obtained by the compact hash function, which are calculated by the same method for mₙmₙ₋₁,...,mᵢ and mₙmₙ-₁,...,mᵢ' (bit strings obtained by performing bit inversion of mᵢ), and evaluates whether or not the collision (including a difference of the least significant bit) can be avoided. Since the encrypted data generation unit 102 generates the comparison encrypted data by using cᵢ (and the random number r) for which it is evaluated that the collision can be avoided in step S1309 for all i, it is possible to suppress the above-described deterioration in search accuracy. Although the search accuracy is improved by performing the evaluation processing in steps S1305 to S1309, the evaluation processing in steps S1305 to S1309 may be omitted.

Fig. 7 is an explanatory diagram illustrating a specific example of the comparison encrypted data generation processing described in Fig. 6. An example of processing of generating the comparison encrypted data of a decimal integer of 11 is described below. The decimal integer of 11 can be expressed as 4-bit data by (1011).

Hereinafter, in a case where loop processing is performed a plurality of times, for example, the first step S1302 is described as step S1302a, the second step S1302 is described as step S1302b, the third step S1302 is described as step S1302c, the fourth step S1302 is described as step S1302d, and the same applies to the other steps.

First, the encrypted data generation unit 102 generates the random number r (S1300). The encrypted data generation unit 102 initializes the variable i to 4 (S1301). Hereinafter, the steps of processing in steps S1302 to S1313 are performed in order from the most significant bit.

The encrypted data generation unit 102 extracts 1, which is a value of m₄, from the data (S1302a). The encrypted data generation unit 102 obtains a hash value Hₛₖ(1) of a value obtained by concatenating the value 1 of m₄ and the secret key sk (S1303a). The encrypted data generation unit 102 inputs a value obtained by concatenating the hash value Hₛₖ(1) obtained in step S1303 and the random number r to the compact hash function CH to obtain a hash value Hᵣ(Hₛₖ(1)) (S1304a).

The encrypted data generation unit 102 calculates m₄ xor 1 (= 0) and stores 0 as m₄' (S1305a). The encrypted data generation unit 102 obtains a hash value Hₛₖ (0) of a value obtained by concatenating a value 0 of m₄' and the secret key sk (S1306a). The encrypted data generation unit 102 inputs a value obtained by concatenating the hash value Hₛₖ(0) obtained in step S1306a and the random number r to the compact hash function CH to obtain a hash value Hᵣ(Hₛₖ(0)) (S1307a).

The encrypted data generation unit 102 performs an xor operation on the hash value obtained in step S1304a and the hash value obtained in step S1307a (S1308a). In a case where the encrypted data generation unit 102 determines that a value obtained in step S1308a is equal to 0 or 1, the processing returns to step S1300 (S1309a).

In a case where the encrypted data generation unit 102 determines that the value obtained in step S1308a is neither 0 nor 1, the processing proceeds to step S1310a. Hereinafter, a case where the processing proceeds to step S1310a is described.

The encrypted data generation unit 102 performs an xor operation on the hash value obtained in step S1304a and the value 1 of m₄ to obtain Hᵣ(Hₛₖ(1)) xor 1 (S1310a). The encrypted data generation unit 102 stores a value obtained in step S1310a as c₄ (S1311a). The encrypted data generation unit 102 decreases the value of the variable i by 1 from 4 to 3 (S1312a). Since the value after the decrement is equal to or more than 1, the processing proceeds to step S1302b.

The encrypted data generation unit 102 extracts 1, which is the value of m₄, and 0, which is a value of m₃, from the data (S1302b). The encrypted data generation unit 102 obtains a hash value Hₛₖ(10) of a value obtained by concatenating m₄m₃(= 10) and the secret key sk (S1303b). The encrypted data generation unit 102 inputs a value obtained by concatenating the hash value Hₛₖ(10) obtained in step S1303 and the random number r to the compact hash function CH to obtain a hash value Hᵣ(Hₛₖ(10)) (S1304b).

The encrypted data generation unit 102 calculates m₃ xor 1 (= 1) and stores 1 as m₃' (S1305b). The encrypted data generation unit 102 obtains a hash value Hₛₖ(11) of a value obtained by concatenating m₄m₃' (= 11) and the secret key sk (S1306b). The encrypted data generation unit 102 inputs a value obtained by concatenating the hash value Hₛₖ(11) obtained in step S1306b and the random number r to the compact hash function CH to obtain a hash value Hᵣ(Hₛₖ(11)) (S1307b).

The encrypted data generation unit 102 performs an xor operation on the hash value obtained in step S1304b and the hash value obtained in step S1307b (S1308b). In a case where the encrypted data generation unit 102 determines that a value obtained in step S1308b is equal to 0 or 1, the processing returns to step S1300 (S1309b).

In a case where the encrypted data generation unit 102 determines that the value obtained in step S1308b is neither 0 nor 1, the processing proceeds to step S1310b. Hereinafter, a case where the processing proceeds to step S1310b is described.

The encrypted data generation unit 102 performs an xor operation on the hash value obtained in step S1304b and the value 0 of m₃ to obtain Hᵣ(Hₛₖ(10)) xor 0 (S1310b). The encrypted data generation unit 102 stores a value obtained in step S1310b as c₃ (S1311b). The encrypted data generation unit 102 decreases the value of the variable i by 1 from 3 to 2 (S1312b). Since the value after the decrement is equal to or more than 1, the processing proceeds to step S1302c.

The encrypted data generation unit 102 extracts 1, which is the value of m₄, 0, which is the value of m₃, and 1, which is a value of m₂, from the data (S1302c). The encrypted data generation unit 102 obtains a hash value Hₛₖ(101) of a value obtained by concatenating m₄m₃m₂(= 101) and the secret key sk (S1303c). The encrypted data generation unit 102 inputs a value obtained by concatenating the hash value Hₛₖ(101) obtained in step S1303 and the random number r to the compact hash function CH to obtain a hash value Hᵣ(Hₛₖ(101)) (S1304c).

The encrypted data generation unit 102 calculates m₂ xor 1 (= 0) and stores 0 as m₂' (S1305c). The encrypted data generation unit 102 obtains a hash value Hₛₖ(100) of a value obtained by concatenating m₄m₃m₂' (= 100) and the secret key sk (S1306c). The encrypted data generation unit 102 inputs a value obtained by concatenating the hash value Hₛₖ(100) obtained in step S1306c and the random number r as a compact hash function CH to obtain a hash value Hᵣ(Hₛₖ(100)) (S1307c).

The encrypted data generation unit 102 performs an xor operation on the hash value obtained in step S1304c and the hash value obtained in step S1307c (S1308c). In a case where the encrypted data generation unit 102 determines that a value obtained in step S1308c is equal to 0 or 1, the processing returns to step S1300 (S1309c).

In a case where the encrypted data generation unit 102 determines that the value obtained in step S1308c is neither 0 nor 1, the processing proceeds to step S1310c. Hereinafter, a case where the processing proceeds to step S1310c is described.

The encrypted data generation unit 102 performs an xor operation on the hash value obtained in step S1304c and the value 1 of m₂ to obtain Hᵣ(Hₛₖ(101)) xor 1 (S1310c). The encrypted data generation unit 102 stores a value obtained in step S1310c as c₂ (S1311c). The encrypted data generation unit 102 decreases the value of the variable i by 1 from 2 to 1 (S1312c). Since the value after the decrement is equal to or more than 1, the processing proceeds to step S1302b.

The encrypted data generation unit 102 extracts 1, which is the value of m₄, 0, which is the value of m₃, 1, which is the value of m₂, and 1, which is a value of m₁, from the data (S1302d). The encrypted data generation unit 102 obtains a hash value Hₛₖ(1011) of a value obtained by concatenating m₄m₃m₂m₁ (= 1011) and the secret key sk (S1303d). The encrypted data generation unit 102 inputs a value obtained by concatenating the hash value Hₛₖ(1011) obtained in step S1303 and the random number r to the compact hash function CH to obtain a hash value Hᵣ(Hₛₖ(1011)) (S1304d).

The encrypted data generation unit 102 calculates m₁ xor 1 (= 0) and stores 0 as m₁' (S1305d). The encrypted data generation unit 102 obtains a hash value Hₛₖ(1010) of a value obtained by concatenating m₄m₃m₃m₁' (= 1010) and the secret key sk (S1306d). The encrypted data generation unit 102 inputs a value obtained by concatenating the hash value Hₛₖ(1010) obtained in step S1306d and the random number r to the compact hash function CH to obtain a hash value Hᵣ(Hₛₖ(1010)) (S1307d).

The encrypted data generation unit 102 performs an xor operation on the hash value obtained in step S1304d and the hash value obtained in step S1307d (S1308d). In a case where the encrypted data generation unit 102 determines that the value obtained in step S1308d is equal to 0 or 1, the processing returns to step S1300 (S1309d).

In a case where the encrypted data generation unit 102 determines that the value obtained in step S1308d is neither 0 nor 1, the processing proceeds to step S1310d. Hereinafter, a case where the processing proceeds to step S1310d is described.

The encrypted data generation unit 102 performs an xor operation on the hash value obtained in step S1304d, the value 1 of m₁, and m to obtain Hᵣ(Hₛₖ(1011)) xor 1 (S1310d). The encrypted data generation unit 102 stores a value obtained in step S1310a as c₁ (S1311d).

The encrypted data generation unit 102 decreases the value of the variable i by 1 from 1 to 0. Since the value after the decrement is less than 1, the processing proceeds to step S1313. The encrypted data generation unit 102 outputs (rc₄c₃c₂c₁) as the comparison encrypted data (S1314).

The encrypted data generation unit 102 uses the exclusive OR in step S1305. However, the encrypted data generation unit 102 may also use an algebraic operation for inverting the bit value of mᵢ, instead of the exclusive OR. That is, the encrypted data generation unit 102 may calculate 1-mᵢ instead of calculating mᵢ xor 1 and store a calculation result as mᵢ' . Further, in step S1305, the encrypted data generation unit 102 may perform the bit inversion of mᵢ by using another method.

The encrypted data generation unit 102 uses the exclusive OR in step S1308. However, the encrypted data generation unit 102 may also use, for example, the following algebraic operation. For example, when the hash value obtained in step S1304 is hᵢ and the hash value obtained in step S1307 is hᵢ', the encrypted data generation unit 102 may consider hᵢ and hᵢ' as integers instead of the exclusive OR (hᵢ xor hᵢ'), calculate hᵢ - hᵢ' as an output value of step S1308, and proceed to step S1309. In addition, the encrypted data generation unit 102 may use another method in step S1308.

The encrypted data generation unit 102 uses the exclusive OR in step S1310. However, the encrypted data generation unit 102 may also use, for example, the following algebraic operation. For example, the encrypted data generation unit 102 may regard the value hᵢ obtained in step S1304 as an integer, and store (hᵢ + mᵢ) as an output value in step S1310. In addition, the encrypted data generation unit 102 may use another method in step S1310.

Fig. 8 is a flowchart illustrating an example of the encrypted query generation processing in step S230. First, the query is n-bit data, and the n-bit query is represented by a symbol (wₙwₙ₋₁, . . . ,w₁). wₙ is the most significant bit of the query, and w₁ is the least significant bit of the query. A value of each bit of the query is 0 or 1. In a case where the number of bits of the query is less than n, the encrypted query generation unit 202 converts the query into n-bit data by, for example, performing a predetermined padding operation (for example, zero-padding) in advance.

The encrypted query generation unit 202 initializes a value of the variable i to n (S2400). The encrypted query generation unit 202 extracts the query from wₙ to wᵢ (S2401). wₙ,...,wᵢ is an example of a second bit string. The encrypted query generation unit 202 calculates wᵢ xor 1 (that is, a bit of wᵢ is inverted, and if original wᵢ is 0, the bit changes to 1, and if original wᵢ is 1, the bit changes to 0) and stores the calculated value as wᵢ' (S2402).

The encrypted query generation unit 202 obtains a hash value (an example of a third hash value) of a value obtained by concatenating wₙwₙ₋₁,...,wᵢ₊₁wᵢ' (an example of a third bit string) and the encryption key (that is, the secret key sk) received from the distributor 400 in step S460 (S2403). The same secret key sk is used in steps S1303 and S2403. The hash function used in step S2403 is the same as the hash function used in step S1303.

The encrypted query generation unit 202 stores the hash value obtained in step S2403 as qⱼ (S2404). The encrypted query generation unit 202 decreases the value of the variable i by 1 (S2405). The encrypted query generation unit 202 determines whether or not the value of the variable i after the decrement is less than 1 (S2406).

In a case where the encrypted query generation unit 202 determines that the value after the decrement is equal to or more than 1 (S2406: NO), the processing returns to step S2401. In a case where the encrypted query generation unit 202 determines that the value after the decrement is less than 1 (S2406: YES), the encrypted query generation unit 202 outputs the n number of qⱼ created as the encrypted query (qₙqₙ₋₁,...,q₁) (S2407), and ends the encrypted query generation processing.

Fig. 9 is an explanatory diagram illustrating a specific example of the encrypted query generation processing described in Fig. 8. An example of encrypted query creation processing for a decimal integer of 10 is described below. The decimal integer of 10 can be expressed as a 4-bit query in (1010).

Hereinafter, in a case where loop processing is performed a plurality of times, for example, the first step S2402 is described as step S2402a, the second step S2402 is described as step S2402b, the third step S2402 is described as step S2402c, the fourth step S2402 is described as step S2402d, and the same applied to the other steps.

The encrypted query generation unit 202 extracts 1, which is a value of w₄, from the query (S2401a). The encrypted query generation unit 202 calculates w₄ xor 1 (= 0) and stores 0 as w₄' (S2402a). The encrypted query generation unit 202 obtains a hash value Hₛₖ (0) of a value obtained by concatenating the value 0 of w₄' and the secret key sk (S2403a).

The encrypted query generation unit 202 stores the hash value Hₛₖ(0) obtained in step S2403a as q₄ (S2404a). The encrypted query generation unit 202 decreases the value of the variable i by 1 from 4 to 3 (S2405a). Since the value after the decrement is equal to or more than 1, the processing proceeds to step S2401b.

The encrypted query generation unit 202 extracts 1, which is the value of w₄, and 0, which is a value of w₃, from the query (S2401b). The encrypted query generation unit 202 calculates w₃ xor 1 (= 1) and stores 1 as w₃' (S2402b). The encrypted query generation unit 202 obtains a hash value Hₛₖ(11) of a value obtained by concatenating w₄w₃' (= 11) and the secret key sk (S2403b).

The encrypted query generation unit 202 stores the hash value Hₛₖ(11) obtained in step S2403b as q₃ (S2404b). The encrypted query generation unit 202 decreases the value of the variable i by 1 from 3 to 2 (S2405c). Since the value after the decrement is equal to or more than 1, the processing proceeds to step S2401c.

The encrypted query generation unit 202 extracts 1, which is the value of w₄, 0, which is the value of w₃, and 1, which is a value of w₂, from the query (S2401c). The encrypted query generation unit 202 calculates w₂ xor 1 (= 0) and stores 0 as w₂' (S2402c). The encrypted query generation unit 202 obtains a hash value Hₛₖ(100) of a value obtained by concatenating w₄w₃w₂' (= 100) and the secret key sk (S2403c).

The encrypted query generation unit 202 stores the hash value Hₛₖ(100) obtained in step S2403c as q₂ (S2404c). The encrypted query generation unit 202 decreases the value of the variable i by 1 from 2 to 1 (S2405c). Since the value after the decrement is equal to or more than 1, the processing proceeds to step S2401d.

The encrypted query generation unit 202 extracts 1, which is the value of w₄, 0, which is the value of w₃, 1, which is the value of w₂, and 0, which is a value of w₁, from the query (S2401d).

The encrypted query generation unit 202 calculates w₁ xor 1 (= 1) and stores 1 as w₁' (S2402d). The encrypted query generation unit 202 obtains a hash value Hₛₖ(1011) of a value obtained by concatenating w₄w₃w₂w₁' = (1011) and the secret key sk (S2403d).

The encrypted query generation unit 202 stores the hash value Hₛₖ(1011) obtained in step S2403d as q₁ (S2404d). The encrypted query generation unit 202 decreases the value of the variable i by 1 from 1 to 0. Since the decremented value is less than 1, the encrypted query generation unit 202 outputs q₄q₃q₂q₁ as the encrypted query (S2406a).

Fig. 10 is a flowchart illustrating an example of comparison processing for the comparison encrypted data and the encrypted query in step S370. The encrypted data comparison unit 302 initializes the value of the variable i to n (S3700). The encrypted data comparison unit 302 extracts the random number r from the comparison encrypted data (S3701). The encrypted data comparison unit 302 extracts cᵢ from the comparison encrypted data and extracts qᵢ from the encrypted query (S3702).

The encrypted data comparison unit 302 inputs a value obtained by concatenating qᵢ and the random number r to the compact hash function CH to obtain a hash value Hᵣ(qᵢ) (S3703). The compact hash function CH used in step S3703 is the same as the compact hash function CH used in step S1304. The encrypted data comparison unit 302 obtains an exclusive OR (an example of a second exclusive OR) of the hash value (an example of the fourth hash value) obtained in step S3703 and cᵢ (S3704).

The encrypted data comparison unit 302 determines whether or not the value obtained in step S3074 is 1 or 0 (an integer (or natural number) of 0 or 1, that is, a bit string in which values of all bits are 0, or a bit string in which only a value of the least significant bit is 1 and values of all the other bits are 0) (S3075). In a case where the encrypted data comparison unit 302 determines that the value obtained in step S3074 is either 1 or 0 (S3075: YES), the encrypted data comparison unit 302 outputs a comparison processing result corresponding to the value obtained in step S3704 (S3708), and ends the data comparison processing.

In a case where the encrypted data comparison unit 302 determines that the value obtained in step S3074 is neither 1 nor 0 (S3705: NO), the value of the variable i is decreased by 1 (S3706). The encrypted data comparison unit 302 determines whether or not the value of the variable i after the decrement is less than 1 (S3707).

In a case where the encrypted data comparison unit 302 determines that the value of the variable i after the decrement is equal to or more than 1 (S3706: NO), the processing returns to step S3702. In a case where the encrypted data comparison unit 302 determines that the value of the variable i after the decrement is less than 1 (S3706: YES), the encrypted data comparison unit 302 performs the processing in step S3708 and ends the data comparison processing.

In step S3708, the encrypted data comparison unit 302 determines that the plaintext is larger than the query if the value obtained in step S3704 is 1, determines that the plaintext is smaller than the query if the value is 0, and determines that the plaintext is equal to the query if the value is any other value (that is, the random number appears).

The encrypted data comparison unit 302 uses the exclusive OR in step S3704. However, the encrypted data comparison unit 302 may also use, for example, the following algebraic operation. For example, the encrypted data comparison unit 302 may consider the hash values Hᵣ(qᵢ) obtained in step S3703 and Cᵢ as integers, and may proceed to step S3705 using a result of calculating Cᵢ - Hᵣ(qᵢ) instead of the exclusive OR as an output value of step S3704. In step S3704, the encrypted data comparison unit 302 may use another method.

Fig. 11 is an explanatory diagram illustrating a specific example of the comparison processing for the comparison encrypted data and the encrypted query described in Fig. 10. Fig. 7 illustrates encryption processing for the data (1011), and Fig. 9 illustrates encryption processing for the query (1010). Fig. 11 illustrates an example of processing of comparing the comparison encrypted data obtained in the example of Fig. 7 with the encrypted query obtained in the example of Fig. 9. Since 1011 > 1010, in the example of Fig. 11, a comparative determination result indicating that the data is larger than the query is finally output.

First, the encrypted data comparison unit 302 initializes the variable i to 4 (S3700). The encrypted data comparison unit 302 extracts the random number r from the comparison encrypted data (S3701). Hereinafter, the steps of processing in steps S3701 to S3707 are performed in order from the most significant bit.

Hereinafter, in a case where loop processing is performed a plurality of times, for example, the first step S3702 is described as step S3702a, the second step S3702 is described as step S3702b, the third step S3702 is described as step S3702c, the fourth step S3702 is described as step S3702d, and the same applies to the other steps.

The encrypted data comparison unit 302 extracts q₄ from the encrypted query (S3702a). q₄ is a hash value Hₛₖ(0). The encrypted data comparison unit 302 inputs a value obtained by concatenating the value Hₛₖ(0) of q₄ and the random number r to the compact hash function CH to obtain a hash value Hᵣ(Hₛₖ(0)) (S3703a).

The encrypted data comparison unit 302 extracts c₄ from the comparison encrypted data and performs an xor operation on c₄ = Hᵣ(Hₛₖ (1)) xor 1 and the hash value Hᵣ(Hₛₖ(0)) obtained in step S3703a (S3704a). Here, as long as an appropriate hash function is used, a possibility that the hash value for the value 1 and the hash value for the value 0 overlap each other can be ignored. Therefore, as a result of the xor operation, a random number obtained by the xor operation performed on two different hash values is output.

Therefore, in step S3705a, the encrypted data comparison unit 302 determines that a value output in step S3704a is neither 1 nor 0. The encrypted data comparison unit 302 decreases a value of the variable i by 1 from 4 to 3 (S3706a). Since the value after the decrement is equal to or more than 1, the processing proceeds to step S3702b.

The encrypted data comparison unit 302 extracts q₃ from the encrypted query (S3702b). q₃ is a hash value Hₛₖ(11). The encrypted data comparison unit 302 inputs a value obtained by concatenating q₃ = Hₛₖ(11) and the random number r to the compact hash function CH to obtain a hash value Hᵣ(Hₛₖ(11)) (S3703b).

The encrypted data comparison unit 302 extracts c₃ from the comparison encrypted data and performs an xor operation on c₃ = Hᵣ(Hₛₖ(10)) xor 0 and the hash value Hᵣ(Hₛₖ(11)) obtained in step S3703b (S3704b). Since different values, 10 and 11, are input to the hash function, a random number is output as a result of the xor operation as long as an appropriate hash function is used.

Therefore, in step S3705b, the encrypted data comparison unit 302 determines that a value output in step S3704b is neither 1 nor 0. The encrypted data comparison unit 302 decreases the value of the variable i by 1 from 3 to 2 (S3706b). Since the value after the decrement is equal to or more than 1, the processing proceeds to step S3702c.

The encrypted data comparison unit 302 extracts q₂ from the encrypted query (S3702c). q₂ is a hash value Hₛₖ(100). The encrypted data comparison unit 302 inputs a value obtained by concatenating the value Hₛₖ (100) of q₂ and the random number r to the compact hash function CH to obtain a hash value Hᵣ(Hₛₖ(100)) (S3703c).

The encrypted data comparison unit 302 extracts c₂ from the comparison encrypted data and performs an xor operation on c₂ = Hᵣ(Hₛₖ(101)) xor 1 and the hash value Hᵣ(Hₛₖ(100)) obtained in step S3703c (S3704c). Since different values, 101 and 100, are input to the hash function, a random number is output as a result of the xor operation as long as an appropriate hash function is used.

Therefore, in step S3705c, the encrypted data comparison unit 302 determines that a value output in step S3704c is neither 1 nor 0. The encrypted data comparison unit 302 decreases the value of the variable i by 1 from 2 to 1 (S3706c). Since the value after the decrement is equal to or more than 1, the processing proceeds to step S3702d.

The encrypted data comparison unit 302 extracts q₁ from the encrypted query (S3702d). q₁ is a hash value Hₛₖ(1011). The encrypted data comparison unit 302 inputs a value obtained by concatenating the value Hₛₖ (1011) of q₁ and the random number r to the compact hash function CH to obtain a hash value Hᵣ(Hₛₖ(1011)) (S3703d).

The encrypted data comparison unit 302 extracts c₁ from the comparison encrypted data and performs an xor operation on c₁ = Hᵣ(Hₛₖ(1011)) xor 1 and the hash value Hᵣ(Hₛₖ(1011)) obtained in step S3703d (S3704d). Since the same value of 1011 is input to the hash function, the hash values are also the same. Therefore, 1 is output as a result of the xor operation.

Since the value output in step S3704d is 1, the encrypted data comparison unit 302 proceeds to step S3708 (S3705d). Since the value output in step S3704d is 1, the encrypted data comparison unit 302 outputs a comparison result indicating that the comparison encrypted data is larger than the encrypted query (S3708).

As described above, the encrypted data comparison unit 302 can obtain a magnitude relationship in which the data (1011) is larger than the query (1010) by comparing the comparison encrypted data and the encrypted query in the encrypted state.

In the present embodiment, magnitude comparison is performed in units of 1 bit in step S3705, a random number is output in step S3704 until the magnitude determination is made, and a magnitude comparison result is determined by the appearance of 1 or 0. Therefore, the encrypted data comparison unit 302 can obtain the magnitude comparison result while hiding similarity between the original value of the comparison encrypted data and the original value of the encrypted query.

For example, in the related art, in a case where data is encrypted and a magnitude comparison result is determined without decrypting the encrypted data, there is a possibility that similarity between pieces of encrypted data is determined from a determination result of magnitude comparison between the pieces of encrypted data.

Therefore, the encrypted data comparison system of the present embodiment calculates the first hash value for the value obtained by concatenating the secret key sk to mₙ,...,mᵢ in step S1303, calculates the second hash value obtained by the compact hash function for the value obtained by concatenating the random number r to the first hash value in step S1304, and calculates the exclusive OR of the second hash value and mᵢ (the least significant bit of the data) in step S1310. Even if there is some statistical tendency in the first hash value, particularly, the least significant bit of the first hash value, the encrypted data comparison system calculates the second hash value using the random number before performing the xor operation using mᵢ (the least significant bit) as described above, so that it is possible to reduce a risk of statistically estimating the value of mᵢ and to eventually reduce a risk of estimating similarity between pieces of encrypted data.

In addition, since the hash function has irreversibility, the manager 300 holds the random number r, but cannot generate the second hash value from the random number r and cᵢ. Furthermore, since the random number r is not shared with the viewer 200, it is easy to update the random number, and thus, it is possible to reduce the risk of estimating the similarity between pieces of encrypted data.

In addition, as described above, the encrypted data comparison system of the present embodiment uses the compact hash function (a function that outputs a short hash value) in step S1304, and thus, the data size of the encrypted data can be reduced, and eventually, high-speed processing is implemented.

As described above, the compact hash function may also be used in step S2403, and in this case, the data size of the encrypted query can also be reduced.

In addition, as described above, when the compact hash function is used, a possibility of collision of the hash values increases, but the encrypted data comparison system of the present embodiment can generate the encrypted data by using the hash value evaluated to be able to avoid collision by the evaluation processing in steps S1305 to S1309, and can improve the search accuracy.

Furthermore, since a plurality of schemes indicated by the scheme list 413 are defined, the user can adjust the magnitude of the hash value, and can appropriately adjust the average number of encryptions in the data encryption processing.

When it is assumed that data and a query are 1-bit data, an output value of a hash function is regarded as an integer of 0 or more and less than t, and an output of the hash function exhibits an ideal uniform distribution, an error occurs in a case where hash values are the same as each other or different from each other only in the least significant bit, and thus a probability of occurrence of the comparison error is represented by 2/t. Therefore, a probability that a result of comparison processing is correct is (1-2/t) excluding the probability of occurrence of the error, and an expected value of the number of encryption iterations is represented by the reciprocal of (1-2/t).

Similarly, when it is assumed that data and a query are n-bit data, it is desirable that a correct comparison result is obtained for all bits. A probability that a result of the comparison processing at this time is correct is (1-2/t)^n, and the reciprocal thereof is an expected value of the number of repetitions of the encryption processing. Therefore, by adjusting the magnitude of the hash value, the average number of encryptions in the data encryption processing can be reduced or increased.

For example, if the average number of encryptions is allowed to be three, in a case where the length of the plaintext is 8 bits, it is only necessary to convert each bit of the plaintext into a 4-bit hash value. Similarly, in a case where the plaintext is 16 bits, 32 bits, or 64 bits, it is sufficient if each bit of the plaintext is converted into a 5-bit hash value, a 6-bit hash value, or a 7-bit hash value.

In addition, in a case where it is desired to set the number of repetitions to about 2, it is sufficient if each bit of the plaintext is converted into a 5-bit hash value (the plaintext is 8 bits), a 6-bit hash value (the plaintext is 16 bits), a 7-bit hash value (the plaintext is 32 bits), or an 8-bit hash value (the plaintext is 64 bits). In a case where it is desired to complete the encryption processing in a single pass as much as possible, the length of each hash value is added by one bit. In any case, the size of the encrypted data or the encrypted query is increased only several times at most as compared with the plaintext.

This invention is not limited to the above-described embodiments but includes various modifications. The above-described embodiments are explained in details for better understanding of this invention and are not limited to those including all the configurations described above. A part of the configuration of one embodiment may be replaced with that of another embodiment; the configuration of one embodiment may be incorporated to the configuration of another embodiment. A part of the configuration of each embodiment may be added, deleted, or replaced by that of a different configuration.

The above-described configurations, functions, and processors, for all or a part of them, may be implemented by hardware: for example, by designing an integrated circuit. The above-described configurations and functions may be implemented by software, which means that a processor interprets and executes programs providing the functions. The information of programs, tables, and files to implement the functions may be stored in a storage device such as a memory, a hard disk drive, or an SSD (Solid State Drive), or a storage medium such as an IC card, or an SD card.

The drawings show control lines and information lines as considered necessary for explanations but do not show all control lines or information lines in the products. It can be considered that almost of all components are actually interconnected.

## Claims

1. An encrypted data comparison system comprising:
a register;
a viewer; and
a data comparator,
the register being configured to hold a numerical value to be registered and a secret key,
the viewer being configured to hold a numerical value to be compared and the secret key,
the numerical value to be registered and the numerical value to be compared being expressed by n bits for which a predetermined padding operation has been performed or has not been performed,
a processor of the register being configured to:
acquire a pseudo random number;
perform encryption processing for each i-th bit of the numerical value to be registered;
in the encryption processing for each of the i-th bit,
extract a first bit string from an n-th bit to the i-th bit among the n bits indicating the numerical value to be registered;
acquire a first hash value for a value based on the extracted first bit string and the secret key by using a first hash function;
acquire a second hash value for a value based on the first hash value and the pseudo random number by using a second hash function that outputs a hash value of a predetermined bit or less or a predetermined value or less;
calculate a first exclusive OR of the second hash value and the i-th bit of the numerical value to be registered;
generate encrypted data to be registered including the pseudo random number and each of the calculated first exclusive OR; and
transmit the encrypted data to be registered to the data comparator,
the data comparator being configured to store the encrypted data to be registered,
a processor of the viewer being configured to:
for each j-th bit of the numerical value to be compared,
extract a second bit string from an n-th bit to the j-th bit among the n bits indicating the numerical value to be compared;
acquire a third bit string obtained by inverting the j-th bit of the second bit string;
acquire a third hash value for a value based on the acquired third bit string and the secret key by using the first hash function;
generate an encrypted query including each acquired third hash value; and
transmit the generated encrypted query to the data comparator, and
a processor of the data comparator being configured to:
perform comparison processing for each variable k which is equal to or more than 1 and equal to or less than n;
in the comparison processing for each of the variable k,
acquire a fourth hash value for a value based on the third hash value stored at a k-th position of the encrypted query and the pseudo random number stored in the encrypted data to be registered by using the second hash function;
calculate a second exclusive OR of the acquired fourth hash value and the first exclusive OR stored at a k-th position of the encrypted data to be registered; and
output a comparison result indicating a magnitude relationship between the numerical value to be registered and the numerical value to be compared based on the second exclusive OR.

2. The encrypted data comparison system according to claim 1,
wherein the processor of the register is configured to:
in the encryption processing for each of the i-th bit,
acquire a fourth bit string obtained by inverting the i-th bit of the first bit string;
acquire a fifth hash value for a value based on the acquired fourth bit string and the secret key by using the first hash function;
acquire a sixth hash value for a value based on the fifth hash value and the pseudo random number by using the second hash function;
calculate a third exclusive OR of the second hash value for the i-th bit and the sixth hash value;
calculate, in a case where the third exclusive OR is neither 0 nor 1, the first exclusive OR for the i-th bit;
stop, in a case where the third exclusive OR is 0 or 1, the encryption processing for the i-th bit; and
re-acquire, in a case where the encryption processing is stopped, the pseudo random number, and re-perform the encryption processing for each i-th bit of the numerical value to be registered by using the re-acquired pseudo random number.

3. The encrypted data comparison system according to claim 1,
wherein the register is configured to hold an encryption key,
wherein the processor of the register is configured to:
generate standard encrypted data by encrypting the numerical value to be registered by using the encryption key based on a predetermined encryption method; and
transmit the standard encrypted data to the data comparator, and
wherein the data comparator is configured to store the standard encrypted data.

4. The encrypted data comparison system according to claim 3,
wherein the encrypted query indicates a condition related to comparison between the numerical value to be registered and the numerical value to be compared,
wherein the processor of the register is configured to:
extract encrypted data satisfying the condition from the standard encrypted data based on the comparison result; and
transmit the extracted encrypted data to the viewer,
wherein the viewer is configured to hold a decryption key corresponding to the encryption key, and
wherein the processor of the viewer decrypts the encrypted data received from the data comparator by using the decryption key.

5. The encrypted data comparison system according to claim 1,
wherein the register is configured to hold information indicating a list of schemes each of which indicates a bit length of the numerical value to be registered, a bit length of the second hash value, and the number of times the encryption processing is performed until the encrypted data to be registered is generated,
wherein the processor of the register is configured to:
generate data for displaying the information indicating the list;
receive an input for selecting the scheme included in the list; and
select the scheme from the list according to the input, and
wherein the processor of the register and the processor of the data comparator are configured to use the second hash function based on the selected scheme.

6. The encrypted data comparison system according to claim 1, wherein the first hash function is a function that outputs a hash value of a predetermined bit or less or a predetermined value or less.

7. The encrypted data comparison system according to claim 1,
wherein the processor of the data comparator is configured to:
in the comparison processing for each of the variable k,
change a value of the variable k and perform the comparison processing for the changed variable k in a case where it is determined that a value of the second exclusive OR corresponding to the variable k is neither 1 nor 0,;
end the comparison processing in a case where it is determined that the value of the second exclusive OR corresponding to the variable k is 1 or 0, or in a case where it is determined that the comparison processing has been performed for all values k which are equal to or more than 1 and equal to or less than n although the value of the second exclusive OR corresponding to the variable k is neither 1 nor 0;
generate the comparison result indicating that the numerical value to be registered is larger than the numerical value to be compared when the value of the second exclusive OR calculated when the comparison processing has ended is 1;
generate the comparison result indicating that the numerical value to be registered is smaller than the numerical value to be compared when the value of the second exclusive OR calculated when the comparison processing has ended is 0; and
generate the comparison result indicating that the numerical value to be registered is equal to the numerical value to be compared when the value of the second exclusive OR calculated when the comparison processing has ended is neither 1 nor 0.

8. The encrypted data comparison system according to claim 1,
wherein the data comparator is a cloud server, and
hardware of the data comparator includes a memory and is managed by a second user different from a first user of the register.

9. An encrypted data comparison method by an encrypted data comparison system:
the encrypted data comparison system including a register; a viewer; and a data comparator,
the register being configured to hold a numerical value to be registered and a secret key,
the viewer being configured to hold a numerical value to be compared and the secret key,
the numerical value to be registered and the numerical value to be compared being expressed by n bits for which a predetermined padding operation has been performed or has not been performed,
the encrypted data comparison method comprising:
acquiring, by a processor of the register, a pseudo random number;
performing, by the processor of the register, encryption processing for each i-th bit of the numerical value to be registered;
in the encryption processing for each of the i-th bit,
extracting, by the processor of the register, a first bit string from an n-th bit to the i-th bit among the n bits indicating the numerical value to be registered;
acquiring, by the processor of the register, a first hash value for a value based on the extracted first bit string and the secret key by using a first hash function;
acquiring, by the processor of the register, a second hash value for a value based on the first hash value and the pseudo random number by using a second hash function that outputs a hash value of a predetermined bit or less or a predetermined value or less;
calculating, by the processor of the register, a first exclusive OR of the second hash value and the i-th bit of the numerical value to be registered;
generating, by the processor of the register, encrypted data to be registered including the pseudo random number and each of the calculated first exclusive OR; and
transmitting, by the processor of the register, the encrypted data to be registered to the data comparator,
storing, by the data comparator, the encrypted data to be registered,
for each j-th bit of the numerical value to be compared,
extracting, by a processor of the viewer, a second bit string from an n-th bit to the j-th bit among the n bits indicating the numerical value to be compared;
acquiring, by the processor of the viewer, a third bit string obtained by inverting the j-th bit of the second bit string;
acquiring, by the processor of the viewer, a third hash value for a value based on the acquired third bit string and the secret key by using the first hash function;
generate an encrypted query including each acquired third hash value; and
transmitting, by the processor of the viewer, the generated encrypted query to the data comparator, and
performing, by a processor of the data comparator, comparison processing for each variable k which is equal to or more than 1 and equal to or less than n;
in the comparison processing for each of the variable k,
acquiring, by the processor of the data comparator, a fourth hash value for a value based on the third hash value stored at a k-th position of the encrypted query and the pseudo random number stored in the encrypted data to be registered by using the second hash function;
calculating, by the processor of the data comparator, a second exclusive OR of the acquired fourth hash value and the first exclusive OR stored at a k-th position of the encrypted data to be registered; and
outputting, by the processor of the data comparator, a comparison result indicating a magnitude relationship between the numerical value to be registered and the numerical value to be compared based on the second exclusive OR.

10. A computer-readable non-transitory storage medium storing a program set including one or more programs for causing the encrypted data comparison system to execute the encrypted data comparison method according to claim 9,
wherein the program set:
include a first common program executed by the register, the viewer, and the data comparator;
include a second common program executed by two devices among the register, the viewer, and the data comparator, and a program for a remaining one of the register, the viewer, and the data comparator; or
include a first program for the register, a second program for the viewer, and the third program for the data comparator.

11. A data comparator comprising:
a processor; and a memory,
the memory being configured to hold encrypted data to be registered generated based on a numerical value to be registered and to hold an encrypted query generated based on a numerical value to be compared,
the numerical value to be registered and the numerical value to be compared being expressed by n bits for which a predetermined padding operation has been performed or has not been performed,
in generating the encrypted data to be registered encryption processing for each i-th bit of the numerical value to be registered being performed,
in the encryption processing for each of the i-th bit:
a first bit string being extracted from an n-th bit to the i-th bit among the n bits indicating the numerical value to be registered;
a first hash value for a value being acquired based on the extracted first bit string and a predetermined secret key by using a first hash function;
a second hash value for a value being acquired based on the first hash value and a pseudo random number by using a second hash function that outputs a hash value of a predetermined bit or less or a predetermined value or less; and
a first exclusive OR of the second hash value and the i-th bit of the numerical value to be registered being calculated;
the encrypted data to be registered including the pseudo random number and each of the calculated first exclusive OR;
in generating the encrypted query, for each j-th bit of the numerical value to be compared:
a second bit string being extracted from an n-th bit to the j-th bit among the n bits indicating the numerical value to be compared;
a third bit string obtained by inverting the j-th bit of the second bit string being acquired; and
a third hash value for a value being acquired based on the acquired third bit string and the secret key by using the first hash function;
the encrypted query including each acquired third hash value, and
the processor being configured to:
perform comparison processing for each variable k which is equal to or more than 1 and equal to or less than n;
in the comparison processing for each of the variable k,
acquire a fourth hash value for a value based on the third hash value stored at a k-th position of the encrypted query and the pseudo random number stored in the encrypted data to be registered by using the second hash function;
calculate a second exclusive OR of the acquired fourth hash value and the first exclusive OR stored at a k-th position of the encrypted data to be registered; and
output a comparison result indicating a magnitude relationship between the numerical value to be registered and the numerical value to be compared based on the second exclusive OR.
